# EUROPÄISCHE PATENTSCHRIFT

(11) **EP 3 715 267 B1**
(45) Veröffentlichungstag und Bekanntmachung des Hinweises auf die Patenterteilung: **18.08.2021**
(21) Anmeldenummer: 20155990.3
(22) Anmeldetag: 07.02.2020
(51) Int. Cl.: B65B 9/04, B26D 5/00, B65B 65/02, F16H 21/18, B29C 51/38

(54) **ARBEITSSTATION FÜR EINE VERPACKUNGSMASCHINE**
WORK STATION FOR A PACKING MACHINE
STATION DE TRAVAIL POUR UNE MACHINE D'EMBALLAGE

(30) Priorität: 26.03.2019 DE 102019107784; 27.05.2019 DE 102019114126
(43) Veröffentlichungstag der Anmeldung: 30.09.2020
(73) Patentinhaber: Weber Maschinenbau GmbH Breidenbach, 35236 Breidenbach (DE)
(72) Erfinder: Bauer, Sigfrid, 17091 Groß-Teetzleben (DE); Jupe, Sven, 17033 Neubrandenburg (DE); Zimansky, Axel, 17033 Neubrandenburg (DE)
(74) Vertreter: Manitz Finsterwald Patent- und Rechtsanwaltspartnerschaft mbB

(56) Entgegenhaltungen:
- EP-A1- 2 384 866
- EP-A1- 2 522 580
- EP-A1- 2 666 727
- EP-A1- 2 896 573
- WO-A1-2004/110871
- WO-A2-2005/075291
- DE-A1- 10 351 567
- DE-A1-102006 050 415
- DE-U1-202015 009 453

## Beschreibung

Die Erfindung betrifft eine Arbeitsstation für eine Verpackungsmaschine, mit einem am Boden abgestützten Gestell, zumindest einer Arbeitseinheit mit einem Arbeitswerkzeug, und zumindest einem am Gestell abgestützten Hubmechanismus, mit dem die Arbeitseinheit zur Ausführung eines Arbeitshubs relativ zu dem Gestell angehoben und abgesenkt werden kann. Bei der Verpackungsmaschine handelt es sich insbesondere um eine Tiefziehverpackungsmaschine.

Verpackungsmaschinen, mit denen Verpackungen hergestellt, insbesondere aus Materialbahnen wie beispielsweise Folienbahnen, und gleichzeitig mit zu verpackenden Produkten, wie beispielsweise Lebensmittel, gefüllt werden, führen eine Vielzahl von Arbeitsschritten an mehreren unterschiedlichen Arbeitsstationen aus, die in einer Transport- oder Längsrichtung der Verpackungsmaschine verteilt angeordnet sind.

In vielen Fällen werden in einer Unterfolie auch als Mulden bezeichnete Vertiefungen ausgebildet. Dies erfolgt an einer sogenannten Formstation, bei der es sich insbesondere um eine Tiefziehstation handelt. An einer stromabwärts gelegenen Siegelstation wird eine zuvor auf die Unterfolie aufgebrachte Oberfolie mit der Unterfolie verbunden, was typischerweise durch einen thermischen Prozess erfolgt, der als Versiegeln bezeichnet wird. An stromabwärts der Siegelstation gelegenen Arbeitsstationen werden die Verpackungen vereinzelt. Dies erfolgt insbesondere durch Schneid- oder Stanzwerkzeuge. Weitere Arbeitsstationen, die insbesondere stromaufwärts der Siegelstation angeordnet sind, können dazu dienen, die Unterfolie und/oder die Oberfolie sowie gegebenenfalls vorgesehene Zwischenfolien mit Lochungen zu versehen, die beispielsweise in der Siegelstation zum Evakuieren und Begasen der Verpackungen dienen.

Die Arbeitsstationen einer Verpackungsmaschine umfassen typischerweise zumindest ein Arbeitswerkzeug, das zum Ausführen eines Arbeitsschrittes angehoben wird, um mit einem Gegenwerkzeug zusammenzuwirken. Bei dem Gegenwerkzeug kann es sich um ein einfaches Widerlager oder ein eine zusätzliche Arbeitsfunktion ausführendes Werkzeug handeln. Auch das Gegenwerkzeug kann zur Ausführung eines Arbeitsschrittes eine Hubbewegung ausführen.

Während die jeweilige Arbeitsbreite der Verpackungsmaschine, also deren quer zur Transportrichtung der Materialbahnen und somit quer zur Arbeits- oder Längsrichtung der Verpackungsmaschine gemessene Abmessung, einen entsprechenden Bauraum für die Arbeitsstationen zur Verfügung stellt, ist der zur Verfügung stehende Bauraum in Transport- oder Längsrichtung für den Hubmechanismus der Arbeitsstation regelmäßig stark beschränkt.

Der Konstrukteur einer Verpackungsmaschine oder einer Arbeitsstation für eine Verpackungsmaschine sieht sich also mit dem Problem konfrontiert, einen Hubmechanismus bereitstellen zu müssen, der zumindest in Längsrichtung relativ wenig Bauraum benötigt, gleichzeitig aber in der Lage ist, vergleichsweise hohe Kräfte zu übertragen. Bekannte Lösungen setzen beispielsweise pneumatische Antriebe oder elektrische Linearantriebe oder sogenannte Elektrozylinder ein. Hierzu wird beispielsweise auf DE 103 51 567 A1 verwiesen. Derartige Antriebe benötigen jedoch vergleichsweise viel Bauraum und sind zudem häufig mit dem weiteren Nachteil behaftet, dass sie nur eine Hubbewegung zwischen zwei festen Endlagen erlauben.

Aufgabe der Erfindung ist es, eine Arbeitsstation der eingangs genannten Art derart weiterzubilden, dass bei möglichst geringem Platzbedarf insbesondere in Längsrichtung der Arbeitshub der Arbeitseinheit möglichst flexibel gesteuert werden kann, wobei gleichzeitig sichergestellt sein muss, dass eine ausreichende Stabilität gegeben ist, um möglichst große Kräfte übertragen zu können.

Die Lösung dieser Aufgabe erfolgt durch die Merkmale des Anspruchs 1.

Insbesondere ist erfindungsgemäß vorgesehen, dass der Hubmechanismus einen Antrieb, einen Rotor und ein Getriebe umfasst, wobei der Rotor mittels des Antriebs zum Anheben der Arbeitseinheit in die eine Richtung und zum Absenken der Arbeitseinheit in die entgegengesetzte Richtung drehbar ist, wobei das Getriebe eingangsseitig mit dem Rotor und ausgangsseitig mit der Arbeitseinheit verbunden ist, und wobei der Antrieb ein Drehantrieb mit einem rotierenden Antriebsorgan ist, insbesondere einem Läufer oder einer Ausgangswelle eines Elektromotors, wobei die Drehbewegung des Ausgangsorgans auf den Rotor übertragen wird.

Das erfindungsgemäße Antriebskonzept, bei dem ein Drehantrieb einen Rotor in Drehung versetzt, dessen Drehbewegung auf das Getriebe übertragen wird, bei dem also konsequent Linearantriebe vermieden werden, erlaubt unterschiedliche, an die jeweiligen Anforderungen anpassbare Getriebekonzepte, die aber in jedem Fall Platz sparend und in einer zur Übertragung großer Kräfte ausreichend stabilen Weise ausgebildet sein können.

Bevorzugte Ausgestaltungen der Erfindung sind auch in den abhängigen Ansprüchen, der nachfolgenden Beschreibung sowie der Zeichnung angegeben.

Gemäß einer bevorzugten Ausführungsform umfasst der Antrieb einen Servomotor. Der Einsatz eines derartigen Motors erlaubt eine flexibel gesteuerte Bewegung des Hubmechanismus und somit der Arbeitseinheit. Die Geschwindigkeit der Arbeitseinheit während des Arbeitshubs kann beliebig variiert werden. In Abhängigkeit von der jeweiligen Anwendung kann somit der Arbeitseinheit ein grundsätzlich beliebiger Geschwindigkeitsverlauf vorgegeben werden.

Bevorzugt erstreckt sich der Hubmechanismus in einer Querrichtung und in einer Längsrichtung, wobei die Ausdehnung des Hubmechanismus in Längsrichtung kleiner ist als in Querrichtung. Insbesondere beträgt die Ausdehnung in Längsrichtung weniger als 1/2 oder weniger als 1/3 oder weniger als 1/4 oder weniger als 1/5 der Ausdehnung in Querrichtung.

Vorzugsweise ist der Hubmechanismus in einem gedachten quaderförmigen Raumelement enthalten, das eine in Querrichtung gemessene Breite und eine in Längsrichtung gemessene Länge aufweist, wobei die Länge weniger als 200 mm, vorzugsweise weniger als 140 mm beträgt. Hierdurch kann erreicht werden, dass der Hubmechanismus in Längsrichtung nicht mehr Platz benötigt als eine jeweilige Verpackung, die in einer Verpackungsmaschine hergestellt bzw. mit einem zu verpackenden Produkt gefüllt wird, in welche die Arbeitsstation integriert ist.

Bei dem Getriebe des Hubmechanismus handelt es sich insbesondere um ein ebenes oder räumliches Koppelgetriebe. Derartige Getriebe können in vielfältiger Weise aufgebaut sein und somit an unterschiedliche Anforderungen angepasst werden. Die Erfindung erlaubt insofern einen Rückgriff auf bewährte Konstruktionsprinzipien.

Vorzugsweise umfasst das Getriebe wenigstens eine Kniehebelanordnung, insbesondere eine Doppelkniehebel-Anordnung. Hierdurch kann sich der erfindungsgemäße Hubmechanismus die grundsätzlich bekannten Vorteile des Kniehebel-Konzeptes zunutze machen. Von Vorteil ist insbesondere, dass in der durchgestreckten Stellung, wenn die auf das Getriebe einwirkende Kraft maximal ist, diese nicht vom Antrieb, sondern von den Getriebeelementen aufgenommen werden kann.

Gemäß einer bevorzugten Ausgestaltung umfasst das Getriebe zwei, bevorzugt baugleiche, Getriebeteile, die mittels des Rotors parallel beaufschlagt werden. Diese beiden Getriebeteile sind insbesondere bezogen auf die Längsrichtung an der gleichen Position angeordnet und in Querrichtung voneinander beabstandet. Folglich kann in einer vorteilhaften Ausgestaltung vorgesehen sein, dass in Querrichtung des Hubmechanismus gesehen der Rotor zwischen den beiden Getriebeteilen angeordnet ist. Bevorzugt ist der Rotor mittig zwischen den beiden Getriebeteilen angeordnet. Es lässt sich folglich ein insofern symmetrischer Aufbau realisieren, der die zur Verfügung stehende Breite nutzt und gleichzeitig eine gleichmäßige Beaufschlagung der Arbeitseinheit gewährleistet.

Vorzugsweise sind die beiden Getriebeteile mit dem Rotor an unterschiedlichen Eingangsstellen verbunden, die vorzugsweise bezüglich einer Drehachse des Rotors auf dem gleichen Radius liegen und um 180° gegeneinander versetzt sind.

Unabhängig davon, ob das Getriebe zwei, bevorzugt baugleiche, Getriebeteile umfasst oder nicht, kann generell gemäß einem Ausführungsbeispiel vorgesehen sein, dass der Hubmechanismus bezüglich der Drehachse des Rotors einen symmetrischen Aufbau aufweist.

Gemäß einem bevorzugten Aufbaukonzept umfasst das Getriebe oder jeder einer Mehrzahl von das Getriebe bildenden Getriebeteilen zumindest einen mit dem Rotor gelenkig verbundenen Lenker, wenigstens eine mit dem Gestell gelenkig verbundene Schwinge und zumindest eine mit der Arbeitseinheit gelenkig verbundene Koppel. Durch die Positionierung der Anlenkstellen kann das kinematische Verhalten des Getriebes gezielt vorgegeben werden. Die Schwinge sorgt für die Abstützung am Gestell. Der Rotor kann - je nach konkreter Ausgestaltung des Hubmechanismus - stationär bezüglich des Gestells angeordnet sein oder die Hubbewegung relativ zu dem Gestell mitmachen.

Die Anlenkung des Lenkers an den Rotor erfolgt insbesondere an einer von der Drehachse des Rotors beabstandeten Stelle. In Abhängigkeit von der jeweils gewünschten Kinematik des Getriebes kann der mit dem Rotor verbundene Lenker einen gekrümmten Verlauf aufweisen. Die Schwinge und die Koppel können die gleiche Länge aufweisen, wobei dies aber nicht zwingend ist.

Gemäß einem weiteren Ausführungsbeispiel ist vorgesehen, dass der Maximalhub der Arbeitseinheit einer Drehung des Rotors um nicht mehr als 180° entspricht. Unter anderem kann hierdurch der Rotor dazu benutzt werden, gleichzeitig zwei an unterschiedlichen Stellen gelenkig angelenkte Lenker zu beaufschlagen, die jeweils einem von zwei das Getriebe bildenden, insbesondere baugleichen, Getriebeteilen zugeordnet sind.

Bevorzugt wirkt der Antrieb mit dem Rotor über zumindest einen Riemen zusammen, insbesondere über zumindest einen Zahnriemen. Dies erhöht die Flexibilität bei der Positionierung eines den Antrieb bildenden oder zum Antrieb gehörenden Antriebsmotors und des Rotors. Das Antriebsorgan des Antriebs, insbesondere ein Läufer oder eine Ausgangswelle eines den Antrieb bildenden oder zum Antrieb gehörenden Elektromotors, muss nicht direkt über genau einen Antriebsriemen mit dem Rotor zusammenwirken. Es können eine oder mehrere Antriebswellen zwischengeschaltet sein. So kann beispielsweise eine erste zwischengeschaltete Antriebswelle, die sich in Längsrichtung erstreckt, an einer ersten Stelle in Längsrichtung gesehen über einen Antriebsriemen mit dem Antriebsorgan des Antriebs zusammenwirken und an einer axial in Längsrichtung beabstandeten zweiten Stelle mittels eines weiteren Antriebsriemens entweder den Rotor oder eine weitere zwischengeschaltete Antriebswelle beaufschlagen. Auf diese Weise kann der in Längsrichtung zur Verfügung stehende Bauraum genutzt werden, um die Antriebsbewegung des Antriebsorgans des Antriebs auf den Rotor zu übertragen, was wiederum eine höhere Flexibilität bei der Anordnung der einzelnen Komponenten des Hubmechanismus erlaubt.

Die Flexibilität lässt sich alternativ oder zusätzlich dadurch erhöhen, dass gemäß einer weiteren Ausgestaltung der Erfindung der Antrieb einen Antriebsmotor mit einer Ausgangswelle umfasst, die den Eingang einer dem Motor zugeordneten Getriebeeinheit bildet, deren Ausgangswelle senkrecht zur Ausgangswelle des Motors verläuft. Hierdurch kann die Ausgangswelle des Motors senkrecht zur Längsrichtung der Arbeitsstation verlaufen, und die Ausgangswelle des Getriebeteils kann sich in Längsrichtung erstrecken. Besonders vorteilhaft ist dies dann, wenn die Drehachse des Rotors sich ebenfalls in Längsrichtung erstreckt. Die Übertragung der Drehbewegung des Antriebsmotors auf den Rotor kann hierdurch besonders kompakt mit minimalem Platzbedarf in Längsrichtung und unter Ausnutzung des in Querrichtung zur Verfügung stehenden Bauraumes gestaltet werden.

Je nach konkreter Ausgestaltung des Hubmechanismus können erfindungsgemäß der Antrieb und der Rotor entweder beide stationär bezüglich des Gestells angeordnet sein oder gemeinsam eine Hubbewegung relativ zu dem Gestell ausführen.

Gemäß einer bevorzugten Ausgestaltung ist vorgesehen, dass die Arbeitseinheit ausschließlich von dem Hubmechanismus getragen ist. Hierbei ist es folglich nicht erforderlich, die Arbeitseinheit direkt am Gestell abzustützen.

Gemäß einer weiteren möglichen Ausführungsform der Erfindung ist vorgesehen, dass das Getriebe ein Koppelgetriebe ist, dessen horizontale Gelenkachsen parallel zur Drehachse des Rotors verlaufen. Hierbei können folglich die Gelenkachsen des Koppelgetriebes sowie die Drehachse des Rotors parallel zueinander und in Längsrichtung der Arbeitsstation orientiert sein.

In einer solchen Situation kann vorgesehen sein, dass ein mit dem Rotor an einer von der Drehachse des Rotors beabstandeten Stelle gelenkig verbundener Lenker oder Teillenker des Getriebes einen gekrümmten Verlauf aufweist.

In einer weiteren möglichen Ausgestaltung umfasst das Getriebe zwei baugleiche Getriebeteile, die mittels des Rotors parallel beaufschlagt werden und jeweils einen mit dem Rotor gelenkig verbundenen Lenker, eine mit dem Gestell gelenkig verbundene Schwinge und eine mit der Arbeitseinheit gelenkig verbundene Koppel umfassen, wobei der Lenker, die Schwinge und die Koppel an einer gemeinsamen Stelle miteinander gelenkig verbunden sind, die am Gestell entlang einer, vorzugsweise geradlinigen und insbesondere horizontalen, Bahn zwangsgeführt ist.

Bei einem solchen Konzept, aber nicht ausschließlich bei einem solchen Konzept, kann es vorteilhaft sein, wenn auch der Rotor während des Arbeitshubs eine Hubbewegung relativ zu dem Gestell ausführt.

Alternativ kann der Rotor stationär bezüglich des Gestells angeordnet sein, wobei der Lenker wenigstens zwei gelenkig miteinander verbundene Teillenker umfasst, von denen der eine gelenkig mit dem Rotor und der andere mit einer anderen Komponente des Getriebes gelenkig verbunden ist.

Bei einer anderen möglichen Ausgestaltung des erfindungsgemäßen Hubmechanismus ist vorgesehen, dass das Getriebe ein räumliches Koppelgetriebe ist, bei dem die Gelenkachsen zwischen Arbeitseinheit und Koppel, zwischen Gestell und Schwinge und zwischen Koppel und Schwinge horizontal verlaufen, bei dem die Drehachse des Rotors vertikal verläuft und bei dem die Lenker mit dem Rotor einerseits und mit der Koppel oder der Schwinge andererseits jeweils durch ein Kugelgelenk verbunden sind.

Ein solches Konzept hat unter anderem den Vorteil, dass das Antriebsorgan des Antriebs direkt mit dem Rotor zusammenwirken oder sogar einen Bestandteil des Rotors bilden kann.

Insbesondere ist eine Ausgestaltung möglich, wonach der Antrieb ein Drehantrieb mit einem rotierenden Antriebsorgan ist, insbesondere einem Läufer oder einer Ausgangswelle eines Elektromotors, wobei die Drehbewegung des Antriebsorgans auf den Rotor übertragen wird, und wobei die Drehachse des Antriebsorgans parallel zur Drehachse des Rotors verläuft und insbesondere mit der Drehachse des Rotors zusammenfällt.

Folglich kann beispielsweise der Rotor direkt auf die Ausgangswelle eines Elektromotors gesetzt werden. Der Rotor und der Antriebsmotor können so vertikal untereinander und somit insbesondere ohne Versatz in Längsrichtung angeordnet werden, was eine optimale Ausnutzung des in Längsrichtung zur Verfügung stehenden Bauraumes bedeutet.

Gemäß einer weiteren bevorzugten Ausgestaltung der Erfindung umfasst das Getriebe zwei, bevorzugt baugleiche, Getriebeteile, die mittels des Rotors parallel beaufschlagt werden, wobei der Rotor zwei mittels des Antriebs gleichzeitig und gegenläufig drehbare Rotorteile mit zusammenfallenden Drehachsen umfasst, und wobei der eine Rotorteil das eine Getriebeteil und der andere Rotorteil das andere Getriebeteil beaufschlagt. Diese Aufteilung des Rotors in gegenläufig drehbare Rotorteile eröffnet weiteren Spielraum beim Aufbau und bei der Unterbringung des Hubmechanismus in einem vor allem in Längsrichtung beschränkten Bauraum.

Insbesondere kann hierbei vorgesehen sein, dass die beiden Rotorteile axial voneinander beabstandet sind und jeder Getriebeteil einen Lenker umfasst, wobei in dem Zwischenraum zwischen den beiden Rotorteilen der eine Lenker mit dem einen Rotorteil und der andere Lenker mit dem anderen Rotorteil gelenkig verbunden ist, und wobei sich die beiden Lenker aus dem Zwischenraum heraus erstrecken und außerhalb des Zwischenraumes jeweils mit einer anderen Komponente des Getriebes gelenkig verbunden sind.

Für die beiden Rotorteile kann ein gemeinsamer Antrieb vorgesehen sein, der gleichzeitig beide Rotorteile mittels eines gemeinsamen Riemens in Drehung versetzt. Vorzugsweise bildet der Riemen zwei Schlaufen, von denen die eine um ein Antriebsorgan des Antriebs und die andere um eine Umlenkung umläuft, wobei der Riemen zwischen den Schlaufen für beide Rotorteile jeweils eine Teilumschlingung bildet. Bei diesem Konzept genügen folglich ein einziger Antrieb und ein einziger Riemen, um zwei Rotorteile gleichzeitig in Drehung zu versetzen. Vorteilhafterweise kann die Anordnung derart gewählt werden, dass die beiden Rotorteile gleichzeitig und gegenläufig gedreht werden.

Dies ist insbesondere dann von Vorteil, wenn ein insbesondere symmetrischer Aufbau mit zwischen (in Querrichtung gesehen) zwei Getriebeteilen, die das Getriebe bilden, angeordnetem Rotor vorgesehen ist. Der eine Rotorteil beaufschlagt dann das linke Getriebeteil, während der andere Rotorteil das rechte Getriebeteil beaufschlagt.

Bei einer möglichen generellen Anordnung, die für verschiedene der vorstehend erläuterten Konzepte geeignet ist, kann insbesondere vorgesehen sein, dass der Antrieb ein Drehantrieb mit einem rotierenden Antriebsorgan ist, insbesondere einem Läufer oder einer Ausgangswelle eines Elektromotors, wobei die Drehbewegung des Antriebsorgans auf den Rotor übertragen wird, und wobei die Drehachse des Antriebsorgans senkrecht zur Drehachse des Rotors und insbesondere horizontal verläuft.

Gemäß einer alternativen Ausgestaltung der Erfindung kann das Getriebe als ein Watt'sches Planetengetriebe ausgebildet ist.

Ein derartiges Getriebe zeichnet sich durch einen besonders einfachen Aufbau aus, der sich auch deshalb für eine Arbeitsstation der hier in Rede stehenden Art besonders gut eignet, da dieser Aufbau so in der Arbeitsstation angeordnet werden kann, dass wenig Bauraum in Längsrichtung benötigt wird.

Gemäß einem weiteren Ausführungsbeispiel der Erfindung sind zwei Arbeitseinheiten vorgesehen, nämlich eine untere Arbeitseinheit und eine obere Arbeitseinheit, die mit dem Hubmechanismus gleichzeitig und entgegengesetzt derart bewegbar sind, dass beim Anheben der einen Arbeitseinheit die andere Arbeitseinheit abgesenkt wird, und umgekehrt. Es ist folglich nur ein einziger Antrieb erforderlich, um die beiden Arbeitseinheiten gleichzeitig zu bewegen.

Vorzugsweise sind die zwei Arbeitseinheiten zwischen einer offenen Stellung und einer geschlossenen Stellung bewegbar, wobei die Arbeitseinheiten beim Bewegen in die geschlossene Stellung oder bei Erreichen der geschlossenen Stellung mit jeweiligen Werkzeugen gemeinsam eine Bearbeitung vornehmen, insbesondere ein Schneiden, Stanzen, Lochen, Formen, Tiefziehen oder Siegeln.

Es kann vorgesehen sein, dass das eingangsseitig mit dem Rotor verbundene Getriebe ausgangsseitig sowohl mit der einen Arbeitseinheit als auch mit der anderen Arbeitseinheit verbunden ist, insbesondere an zwei unterschiedlichen Stellen. Mittels eines einzigen Getriebes können hierbei folglich die beiden Arbeitseinheiten gleichzeitig beaufschlagt werden.

In einem Ausführungsbeispiel umfasst das Getriebe zwei Getriebeabschnitte, von denen der eine Getriebeabschnitt eingangsseitig mit dem Rotor und ausgangsseitig mit der einen, insbesondere der unteren, Arbeitseinheit verbunden ist, und von denen der andere Getriebeabschnitt eingangsseitig mit dem einen Getriebeabschnitt und ausgangsseitig mit der anderen, insbesondere der oberen, Arbeitseinheit verbunden ist. Hierbei kann folglich die Bewegung der anderen Arbeitseinheit von dem Getriebeabschnitt der einen Arbeitseinheit abgeleitet werden. Es ist somit nicht erforderlich, Getriebeabschnitte beider Arbeitseinheiten mit dem Rotor zu verbinden. Mit anderen Worten sind die Getriebeabschnitte der beiden Arbeitseinheiten in Bezug auf deren gemeinsamen Antrieb, insbesondere auf den Rotor, nicht parallel, sondern in Reihe geschaltet.

Des Weiteren kann vorgesehen sein, dass die beiden Getriebeabschnitte jeweils zumindest ein ebenes oder ein räumliches Koppelgetriebe umfassen. Alternativ oder zusätzlich kann vorgesehen sein, dass die beiden Getriebeabschnitte jeweils wenigstens eine Kniehebelanordnung umfassen, insbesondere jeweils eine Doppelkniehebel-Anordnung.

Alternativ oder zusätzlich kann vorgesehen sein, dass die beiden Getriebeabschnitte jeweils zwei, bevorzugt baugleiche, Getriebeteile umfassen, die parallel beaufschlagt werden, wobei die Getriebeteile des einen Getriebeabschnitts mittels des Rotors parallel beaufschlagt werden und die Getriebeteile des anderen Getriebeabschnitts jeweils mittels eines Getriebeteils des einen Getriebeabschnitts beaufschlagt werden, wobei insbesondere die beiden Getriebeteile des anderen Getriebeabschnitts durch ein starres Verbindungsstück miteinander verbunden sind, welches bevorzugt an beiden Getriebeteilen jeweils gelenkig mit einer Koppel des Getriebeteils verbunden ist.

Ferner kann vorgesehen sein, dass die beiden Getriebeabschnitte jeweils zumindest einen Lenker, wenigstens eine mit dem Gestell gelenkig verbundene Schwinge und zumindest eine mit der jeweiligen Arbeitseinheit gelenkig verbundene Koppel umfassen, wobei bevorzugt für die untere Arbeitseinheit die gelenkige Verbindung zwischen Arbeitseinheit und Koppel oberhalb der gelenkigen Verbindung zwischen Gestell und Schwinge liegt und für die obere Arbeitseinheit die gelenkige Verbindung zwischen Arbeitseinheit und Koppel unterhalb der gelenkigen Verbindung zwischen Gestell und Schwinge liegt, oder umgekehrt. Durch diese unterschiedliche mechanische Verschaltung zwischen Gestell einerseits und jeweiliger Arbeitseinheit andererseits kann erreicht werden, dass eine einzige - und folglich nur einen Richtungssinn aufweisende - Bewegung des gemeinsamen Rotors gleichzeitige gegensinnige Bewegungen der beiden Arbeitseinheiten bewirken kann.

Insbesondere dann, wenn die Arbeitseinheit selbst vergleichsweise schmal (in Längsrichtung gesehen) ist, beispielsweise dann, wenn die Arbeitseinheit ein Schneid- oder Stanzwerkzeug aufweist, kann es ausreichend sein, wenn für die Arbeitseinheit ein einziger erfindungsgemäßer Hubmechanismus der vorstehend erläuterten Art vorgesehen ist.

Dies ist jedoch nicht zwingend. Die Arbeitsstation kann alternativ wenigstens zwei in einer Längsrichtung beabstandete Hubmechanismen gemäß zumindest einer der vorstehend erläuterten Ausgestaltungen aufweisen, also jeweils mit einem Antrieb, einem Rotor und einem Getriebe versehen sein, wobei die Antriebe der Hubmechanismen synchronisiert betreibbar sind, also insbesondere synchron gesteuert werden können, um gemeinsam die Arbeitseinheit anzuheben und abzusenken.

Wenn die Arbeitseinheit beispielsweise ein Formwerkzeug, ein Tiefziehwerkzeug oder ein Siegelwerkzeug umfasst, das eine Ausdehnung in Längsrichtung besitzt, die insbesondere deutlich größer ist als die Länge einer Verpackung, dann kann eine derartige Arbeitsstation durch synchrone Steuerung von beispielsweise zwei Hubmechanismen, die in Längsrichtung beabstandet angeordnet sind, angehoben und abgesenkt werden.

Dies bedeutet aber nicht, dass für z.B. zum Formen, Tiefziehen oder Siegeln vorgesehene Arbeitsstationen zwangsläufig mehrere in Längsrichtung beabstandete Hubmechanismen der erfindungsgemäßen Art aufweisen müssen. Mehrere Hubmechanismen kommen vielmehr insbesondere dann zum Einsatz, wenn diese Arbeitsstationen sogenannte Formate oder Arrays von Verpackungen gleichzeitig herstellen oder bearbeiten sollen, bei denen mehrere Verpackungen, insbesondere Reihen von Verpackungen, in Längsrichtung hintereinander vorgesehen sind. Ein derartiges formatweises Arbeiten z.B. beim Formen, Tiefziehen und Siegeln ist bei Verpackungsmaschinen häufig vorgesehen, aber keineswegs zwingend.

Die Erfindung betrifft außerdem eine Verpackungsmaschine, insbesondere eine Tiefziehverpackungsmaschine, mit zumindest einer erfindungsgemäßen Arbeitsstation.

Vorzugsweise ist die Arbeitsstation in einer Arbeitsrichtung der Verpackungsmaschine, die der vorstehend erwähnten Längsrichtung entspricht, einer Siegelstation der Verpackungsmaschine nachgeordnet, wobei die Arbeitsstation zum Bearbeiten einer Materialbahn, insbesondere einer Folienbahn, zum Bearbeiten einer Verpackung oder eines Teils einer Verpackung, oder zum Vereinzeln von Verpackungen ausgebildet.

Des Weiteren betrifft die Erfindung die Verwendung einer erfindungsgemäßen Arbeitsstation in einer Verpackungsmaschine, insbesondere einer Tiefziehverpackungsmaschine, zum Bearbeiten einer Materialbahn, insbesondere einer Folienbahn, zum Bearbeiten einer Verpackung oder eines Teils einer Verpackung, oder zum Vereinzeln von Verpackungen.

Das erwähnte Bearbeiten umfasst insbesondere ein Schneiden, Stanzen, Lochen, Formen, Tiefziehen oder Siegeln.

Des Weiteren betrifft die Erfindung die Verwendung eines als Drehantrieb ausgebildeten Servomotors als Antrieb in einem Hubmechanismus der in der vorliegenden Offenbarung beschriebenen Art.

Die Erfindung wird im Folgenden beispielhaft unter Bezugnahme auf die Zeichnung beschrieben. Es zeigen:
- Fig. 1a-1e: verschiedene Ansichten eines erfindungsgemäßen Konzeptes, bei dem die Drehachse des Rotors horizontal ausgerichtet ist und der Rotor während des Arbeitshubs ebenfalls eine Hubbewegung ausführt,
- Fig. 2a-2c: verschiedene Ansichten eines weiteren erfindungsgemäßen Konzeptes, bei dem die Drehachse des Rotors vertikal ausgerichtet ist,
- Fig. 3a-3c: ein weiteres erfindungsgemäßes Konzept, bei dem die Drehachse des Rotors wiederum horizontal ausgerichtet ist, der Rotor jedoch bezogen auf die vertikale Richtung stationär bezüglich des Gestells angeordnet ist,
- Fig. 4a und 4b: ein weiteres erfindungsgemäßes Konzept, bei dem die Drehachse des Rotors wiederum horizontal ausgerichtet ist und der Rotor zwei gegenläufig in Drehung versetzbare Rotorteile umfasst,
- Fig. 5a und 5b: ein erfindungsgemäßes Konzept, bei dem das Getriebe des Hubmechanismus als Watt'sches Planetengetriebe ausgebildet ist,
- Fig. 6a-6h: ein weiteres erfindungsgemäßes Konzept, bei dem wie beim Konzept der Fig. 2a-2c die Drehachse des Rotors vertikal ausgerichtet ist und bei dem zwei zusammenwirkende Arbeitseinheiten entgegengesetzte Hubbewegungen ausführen, und
- Fig. 7: schematisch eine Seitenansicht einer Verpackungsmaschine mit mehreren Arbeitsstationen, die jeweils in erfindungsgemäßer Weise ausgebildet sein können.

Um den Aufbau insbesondere des Hubmechanismus besser erläutern zu können, sind bei den einzelnen Darstellungen jeweils bestimmte Bauteile der Arbeitsstation nicht gezeigt. Die Darstellungen zielen insbesondere darauf ab, den grundsätzlichen Aufbau und die Kinematik des Hubmechanismus und insbesondere des jeweils verwendeten Getriebes zu erläutern.

Wie im Einleitungsteil bereits erwähnt, sind die erfindungsgemäßen Arbeitsstationen dazu ausgebildet, in einer Verpackungsmaschine, insbesondere in einer Tiefziehverpackungsmaschine, verwendet zu werden.

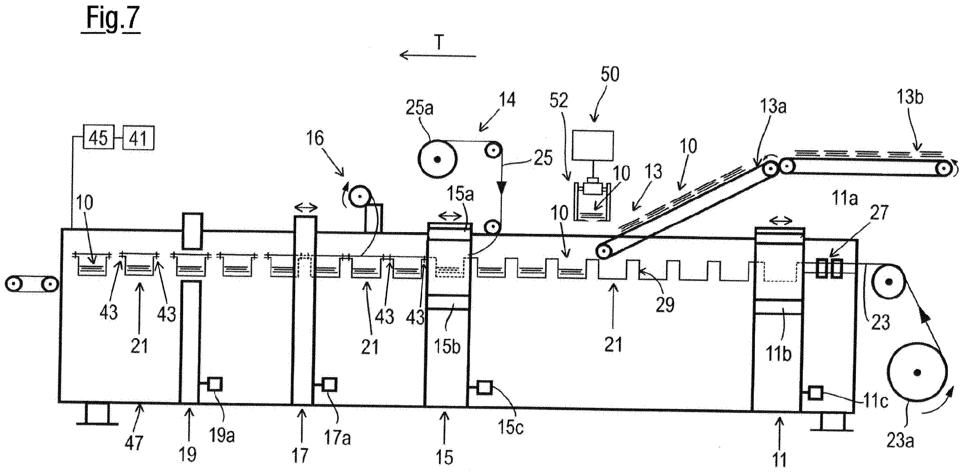

Um einen Überblick über eine derartige Verpackungsmaschine zu geben, wird zunächst anhand von Fig. 7 eine mögliche Ausgestaltung einer solchen Verpackungsmaschine erläutert, in der verschiedene Arbeitsstationen lediglich schematisch angedeutet sind. Diese Arbeitsstationen können in erfindungsgemäßer Weise ausgebildet sein, d.h. der erfindungsgemäße Hubmechanismus kann in einer oder mehreren dieser Arbeitsstationen zum Einsatz kommen.

Die in Fig. 7 dargestellte, in einer Transportrichtung T (die hier der Längsrichtung entspricht) arbeitende Verpackungsmaschine umfasst ein Maschinengestell 47. An einem linken Seitenrahmen und an einem rechten Seitenrahmen des Maschinengestells 47 ist jeweils eine hier nur schematisch am stromaufwärts gelegenen Ende der Maschine dargestellte Transportkette 27 geführt. Die beiden Transportketten 27 bilden gemeinsam eine Transporteinrichtung für eine von einer Vorratsrolle 23a abgezogene Unterfolie 23.

Die Maschine umfasst eine Mehrzahl von in Transportrichtung T aufeinander folgenden Arbeitsstationen, nämlich eine auch als Tiefzieher oder Thermoformer bezeichnete Formstation 11, eine Einbringstation 13 für zu verpackende Produkte 10, eine Zufuhrstation 14 für eine von einer Vorratsrolle 25a abgezogene Oberfolie 25, eine Etikettierstation 16, eine Quertrennstation 17 sowie eine Längstrennstation 19.

Bei den zu verpackenden Produkten 10 handelt es sich beispielsweise um Lebensmittelprodukte, hier in Form von sogenannten Portionen, die jeweils mehrere Scheiben umfassen, welche zuvor mittels eines Lebensmittelslicers (nicht dargestellt) von einem laib- oder riegelförmigen Lebensmittel wie z.B. Wurst, Käse, Schinken oder Fleisch abgetrennt wurden.

Den Betrieb der Verpackungsmaschine einschließlich der erwähnten Arbeitsstationen steuert eine zentrale Steuereinrichtung 41, die außerdem für eine Regelung zuständig ist, auf weiche nachstehend näher eingegangen wird. Zudem ist die Verpackungsmaschine mit einer Bedieneinrichtung 45 versehen, die z.B. einen Touchscreen umfasst, an welchem einem Bediener alle erforderlichen Informationen angezeigt werden können und der Bediener alle notwendigen Einstellungen vor und während des Betriebs der Maschine vornehmen kann.

Aufbau und Funktionsweise der genannten Arbeitsstationen sind dem Fachmann grundsätzlich bekannt, sodass hierauf nicht im Detail eingegangen wird.

An der ein Oberwerkzeug 11a und ein Unterwerkzeug 11b umfassende Formstation 11 werden jeweils in einem Tiefziehprozess in der Unterfolie 23 auch als Mulden bezeichnete Vertiefungen 29 ausgebildet. In diese Vertiefungen 29 werden an der Einbringstation 13 die erwähnten Portionen 10 eingelegt. Die Einbringstation 13 umfasst hier einen sogenannten Einleger, von dem zwei Endlosförderbänder 13a, 13b dargestellt sind. Alternativ oder zusätzlich kann die Einbringstation 13 einen hier ebenfalls schematisch dargestellten Roboter 50 umfassen, z.B. in Form eines sogenannten "Picker", der als Delta-Roboter mit einem Greifer 52, der zwei jeweils eine Portion 10 gemeinsam haltende Schaufeln umfasst, ausgebildet sein kann. Derartige Roboter und deren Einsatz bei der Handhabung von Lebensmitteln, insbesondere beim Einlegen von Portionen in Vertiefungen von Verpackungen, sind dem Fachmann grundsätzlich bekannt, weshalb hier weitergehende Ausführungen nicht erforderlich sind.

Anschließend werden die mit den gefüllten Vertiefungen 29 versehene Unterfolie 23 und die Oberfolie 25 der Siegelstation 15 zugeführt, die ein Oberwerkzeug 15a und ein Unterwerkzeug 15b umfasst. Mittels dieser Werkzeuge 15a, 15b werden die Oberfolie 25 und die Unterfolie 23 miteinander verbunden. Hierdurch werden die Vertiefungen 29 und somit die von Oberfolie 25 und Unterfolie 23 gebildeten Verpackungen 21 verschlossen. In Fig. 7 sind quer zur Transportrichtung T verlaufende, auch als Siegelnähte bezeichnete Siegelstellen 43 schematisch angedeutet.

Im Anschluss an die Siegelstation 15 hängen die Verpackungen 21 noch durch die Oberfolie 25 und die Unterfolie 23 zusammen, müssen also noch vereinzelt werden. In dem hier dargestellten Ausführungsbeispiel werden die Verpackungen 21 vor dem Vereinzeln an der Etikettierstation 16 mit Etiketten 51 versehen. Alternativ können eine oder mehrere Etikettierstationen 16 stromabwärts der Trennstationen 17, 19 positioniert sein. Des Weiteren können eine oder mehrere Arbeitsstationen vorgesehen sein, an denen die Verpackungen 21 mit einer oder mehreren Bedruckungen 53 versehen werden.

Stromabwärts der Trennstationen 17, 19 können weitere Arbeitsstationen vorgesehen sein, beispielsweise eine Waage zur Gewichtskontrolle der Verpackungen 21.

An einer Vielzahl von in Fig. 7 nicht näher bezeichneten Stellen kann die Verpackungsmaschine mit hier nicht dargestellten Messeinrichtungen versehen sein.

So kann eine obere und eine untere Messeinrichtung jeweils unmittelbar hinter der Formstation 11 vorgesehen sein. Jeweils im Anschluss an die Einbringstation 13 kann ebenfalls eine obere und eine untere Messeinrichtung angeordnet sein. Eine weitere Messeinrichtung kann der Zufuhrstation 14 für die Oberfolie 25 zugeordnet sein. Unmittelbar hinter der Siegelstation 15 kann wiederum jeweils eine obere und eine untere Messeinrichtung angeordnet sein. Ebenso können sich jeweils eine obere und eine untere Messeinrichtung an die Etikettierstation 16 anschließen. Des Weiteren kann eine Messeinrichtung stromabwärts der Quertrennstation 17 und eine weitere Messeinrichtung stromabwärts der Längstrennstation 19 angeordnet sein. Eine in Transportrichtung T letzte Messeinrichtung, die keiner der genannten Arbeitsstationen zugeordnet ist, kann zusätzlich vorgesehen sein, um eine von der jeweiligen Anwendung abhängige Vermessung der fertigen Verpackungen 21 durchzuführen. Abweichend hiervon kann die Verpackungsmaschine eine kleinere oder eine größere Anzahl von Messeinrichtungen aufweisen. Insbesondere kann vorgesehen sein, dass nicht hinter jeder Arbeitsstation, sondern nur hinter einigen der Arbeitsstationen jeweils eine oder mehrere Messeinrichtungen vorhanden sind. Des Weiteren ist es möglich, dass in Abhängigkeit von einer jeweiligen Anwendung nur ein Teil der an einer Verpackungsmaschine angebrachten Messeinrichtungen aktiv ist, während die übrigen Messeinrichtungen für die momentane Anwendung nicht verwendet werden.

Anwendungen können sich z.B. hinsichtlich der Art der zu verpackenden Produkte 10, der Größe der Vertiefungen 29 in Längs- und/oder Querrichtung oder hinsichtlich eines Formatsatzes voneinander unterscheiden. Ein Formatsatz bezeichnet hier allgemein eine Gruppe von Items, hier insbesondere sowohl von Portionen 10 als auch Vertiefungen 29 oder Verpackungen 21, die als Ganzes - also formatsatzweise - gehandhabt werden und sich insbesondere durch Anzahl und Abstand von Items in Längs- und Querrichtung voneinander unterscheiden.

So kann z.B. pro Arbeitstakt der Verpackungsmaschine ein Formatsatz von 3 x 4 (3 in Querrichtung und 4 in Längsrichtung) Vertiefungen 29 in der Formstation 11 gebildet werden, an der Einbringstation 13 ein Formatsatz von 3 x 4 entsprechend angeordneten Produkten 10 in einen jeweiligen Formatsatz von Vertiefungen 21 eingebracht werden, und an der Siegelstation 15 ein jeweiliger Formatsatz von 3 x 4 mit Produkten 10 gefüllten Vertiefungen 29 verschlossen werden.

Der Betrieb der Verpackungsmaschine kann so erfolgen, dass Erfassung, Analyse und Beseitigung bzw. Reduzierung von Verpackungsfehlern möglich sind. Hierzu dienen die erwähnten Messeinrichtungen. Auf in diesem Zusammenhang mögliche unterschiedliche Konzepte braucht an dieser Stelle nicht näher eingegangen zu werden.

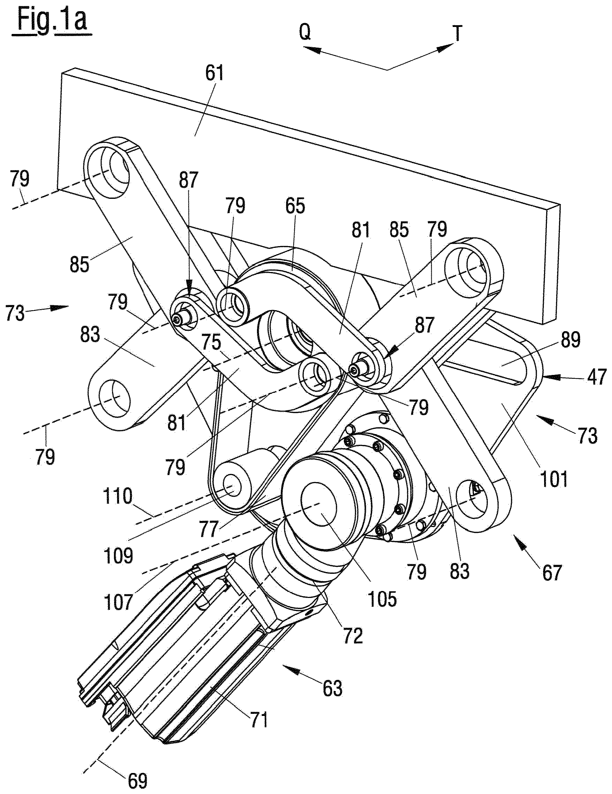

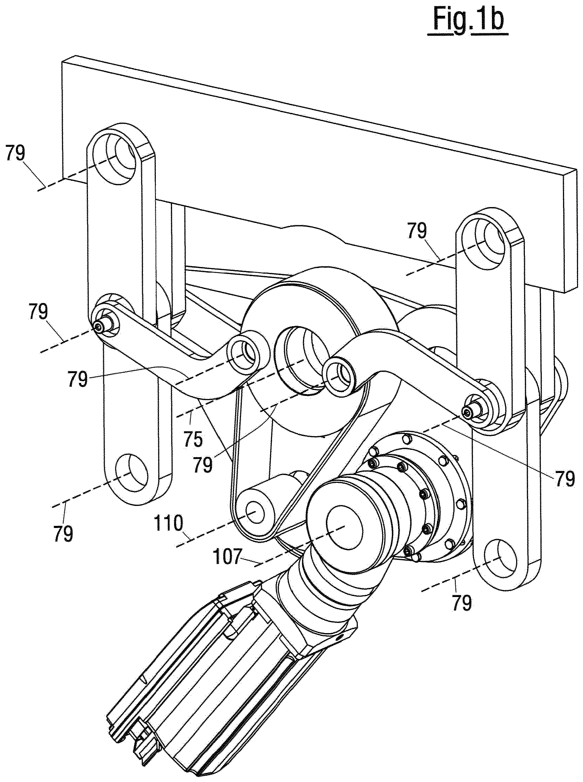

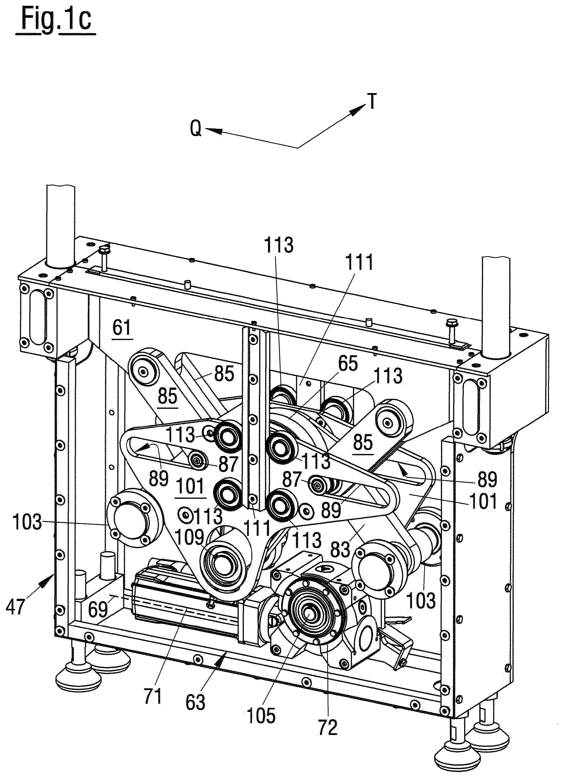

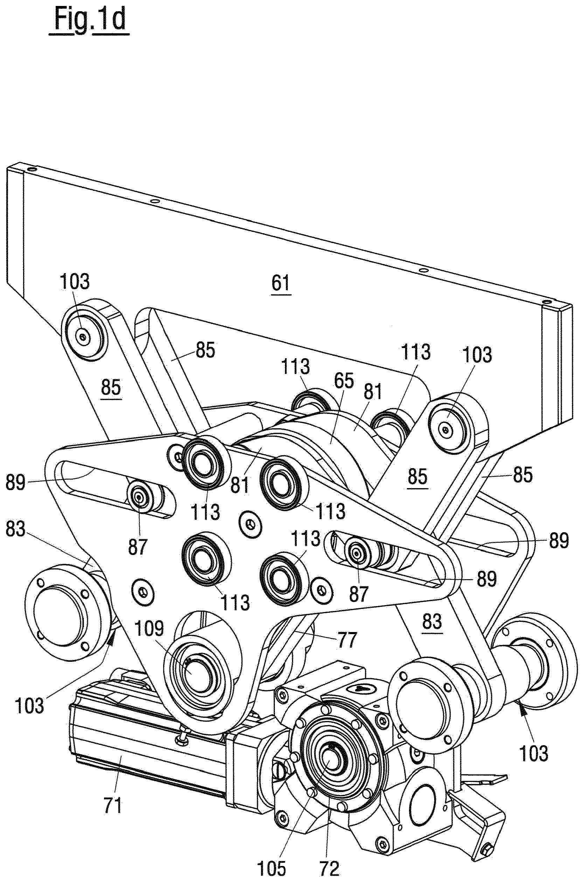

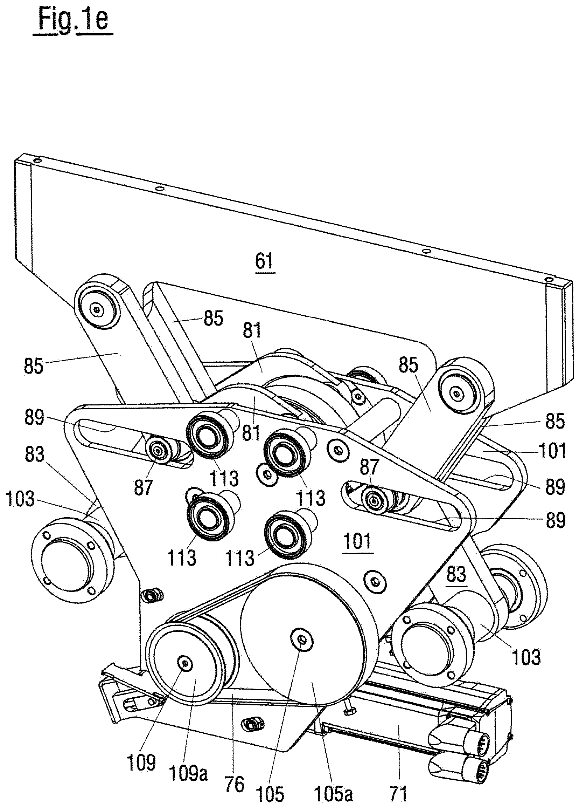

Diese Konzepte, aber auch andere Situationen im Betrieb der Verpackungsmaschine, können einen Eingriff in den Betrieb einer Arbeitsstation, d.h. die Regelung des Betriebs einer Arbeitsstation, insbesondere eine Veränderung der Position der Arbeitsstation bzw. eines Arbeitswerkzeuges der Arbeitsstation beinhalten, beispielsweise eine Positionsänderung in Transportrichtung T. Dies ist in Fig. 1 beispielhaft bei der Formstation 11, der Siegelstation 15 und der Quertrennstation 19 jeweils durch einen Doppelpfeil angedeutet.

Die Arbeitsstationen können für eine derartige Positionsänderung mit einem Stellantrieb 11c, 15c, 17a bzw. 19a versehen sein. Dieser Stellantrieb kann von der Steuereinrichtung 41 automatisch steuerbar oder von einem Bediener manuell betätigbar oder ansteuerbar sein.

Wenn eine erfindungsgemäße Arbeitsstation in Transportrichtung bewegbar sein soll, ist dies gegebenenfalls bei Aufbau und/oder Integration des erfindungsgemäßen Hubmechanismus in geeigneter Weise zu berücksichtigen.

Die erfindungsgemäßen Ausgestaltungen gemäß Fig. 1a und 1b einerseits und gemäß den Fig. 1c-1e andererseits basieren auf dem gleichen Grundkonzept.

Der Antrieb 63 umfasst einen Servomotor 71, dessen Ausgangswelle 69 lediglich durch eine gestrichelte Linie dargestellt und mit einer an den Motor 71 geflanschten Getriebeeinheit 72 derart gekoppelt ist, dass die Ausgangswelle 69 des Motors 71 das Eingangsglied der Getriebeeinheit 72 bildet. Die Getriebeeinheit 72 ist derart ausgebildet, dass eine das Ausgangsglied der Getriebeeinheit 72 bildende Antriebswelle 105 mit einer Drehachse 107 senkrecht zur Ausgangswelle 69 des Motors 71 verläuft.

Zu dem Gestell der Arbeitsstation gehören zwei in Längsrichtung T beabstandete Führungsplatten 101, von denen in Fig. 1a und 1b lediglich die hier hintere Führungsplatte 101 dargestellt sind. Auch insofern wird auf die Ausgestaltung gemäß den Fig. 1c-1e verwiesen. Der Antrieb 63 ist über die Getriebeeinheit 72 stationär am Gestell 47 angeordnet. Die Drehbewegung der Antriebswelle 105 wird über einen hier nur teilweise dargestellten Riementrieb auf einen Rotor 65 übertragen, dessen Drehachse 75 parallel zur Antriebswelle 105 und somit ebenfalls parallel zur Längsrichtung T und somit in horizontaler Richtung verläuft. Von dem erwähnten Riementrieb sind in Fig. 1a und 1b eine Antriebswelle 109 und ein die Antriebswelle 109 mit dem Rotor 75 koppelnder Zahnriemen 77 dargestellt. Wie der Ausgestaltung gemäß den Fig. 1c-1e entnommen werden kann, steht die Antriebswelle 109 auf der Rückseite der Führungsplatte 101 über einen weiteren Zahnriemen mit der Antriebswelle 105 der Getriebeeinheit 72 in Verbindung.

Auf diese Weise kann die Drehbewegung der Ausgangswelle 69 des Servomotors 71 auf den Rotor 65 übertragen werden.

Eine hier durch einen sich in Querrichtung Q erstreckenden Balken dargestellte Arbeitseinheit 61, die mit einem oder mehreren Arbeitswerkzeugen (nicht dargestellt) versehen ist, z.B. einem Stanz- oder Lochwerkzeug, ist zum Ausführen einer Arbeitsbewegung in vertikaler Richtung anhebbar und absenkbar. Die Aufwärtsbewegung der Arbeitseinheit 61 wird auch als Arbeitshub bezeichnet. Zum Anheben und Absenken der Arbeitseinheit 61 wird der Servomotor 71 in der jeweiligen Drehrichtung angesteuert, wobei die daraus resultierende Drehbewegung des Rotors 65 auf die Arbeitseinheit 61 mittels eines Getriebes 67 übertragen wird, das hier zwei in Querrichtung Q beabstandete, den gleichen Aufbau aufweisende Getriebeteile 73 umfasst, zwischen denen der Rotor 65 mittig angeordnet ist.

Bei diesem die beiden Getriebeteile 73 umfassenden Getriebe 67 handelt es sich um ein ebenes Koppelgetriebe, das von dem zentralen, während des Arbeitshubs vertikal mitbewegten Rotor 65 beaufschlagt wird.

Alle Gelenkachsen 79 eines jeden Getriebeteils 73 verlaufen horizontal und somit ebenfalls parallel zur Drehachse 75 des Rotors 65 und zur Drehachse 107 der Ausgangswelle 105 der Getriebeeinheit 72.

Jeder Getriebeteil 73 umfasst eine Kniehebel-Anordnung aus zwei parallelen geraden Koppeln 85, zwei parallelen gekrümmten Lenkern 81 und einer geraden Schwinge 83. Das Getriebe umfasst somit eine Doppel-Kniehebelanordnung, wobei die Kniehebel der beiden Getriebeteile 73 sich während des Arbeitshubs jeweils nach außen von der Drehachse 75 des Rotors 65 weg und somit einander entgegengesetzt bewegen.

Die Schwinge 83 ist an einem Ende gelenkig mit dem Gestell 47 (vgl. hierzu die Ausgestaltung gemäß den Fig. 1c-1e) und am anderen Ende mit der Lenkeranordnung 81 und der Koppelanordnung 85 gelenkig verbunden. Die drei Komponenten des Koppelgetriebes, nämlich Schwinge 83, Lenker 81 und Koppel 85, sind im Ausführungsbeispiel der Fig. 1, also in beiden Ausgestaltungen gemäß Fig. 1a und 1b einerseits und Fig. 1c-1e andererseits, an einer gemeinsamen Stelle 87 gelenkig miteinander verbunden, die sich während des Arbeitshubs horizontal bewegt.

Die Schwinge 83 befindet sich in Längsrichtung T betrachtet zwischen den beiden Koppeln 85, die sich wiederum zwischen den beiden Lenkern 81 befinden. Die beiden Lenker 81 sind jeweils an ihrem anderen Ende gelenkig mit einer der beiden Stirnseiten des Rotors 65 gelenkig verbunden, und zwar an einer in radialer Richtung von der Drehachse 75 des Rotors 65 beabstandeten Stelle. An jeweils diametral bezogen auf die Drehachse 75 des Rotors 65 gegenüberliegenden Stellen greifen die beiden Lenker 81 des anderen Getriebeteils 73 an.

Wie Fig. 1a zeigt, in welcher die Arbeitseinheit 61 in ihrer abgesenkten Stellung dargestellt ist, sind die Lenker 81 der beiden Getriebeteile 73 derart gekrümmt, dass die beiden Kniehebel-Anordnungen in diesem gebeugten Zustand eine kompakte Gesamtkonfiguration einnehmen.

Die beiden Koppelanordnungen 85 der Getriebeteile 73 sind jeweils an in Querrichtung Q beabstandeten Stellen an der Arbeitseinheit 61 angelenkt.

Durch Ansteuern des Servomotors 71 und eine dadurch hervorgerufene Drehbewegung des Rotors 65 können folglich beide Getriebeteile 73 synchron beaufschlagt werden, um so an zwei in Querrichtung beabstandeten Stellen in gleicher Weise an der Arbeitseinheit 61 anzugreifen. Eine mittels der Arbeitseinheit 71 zu übertragende Kraft kann folglich in Querrichtung Q gleichmäßig verteilt unter Zwischenlage einer zu bearbeitenden Materialbahn, beispielsweise einer durchzuschneidenden oder einzustanzenden Folienbahn einer Tiefziehverpackungsmaschine, auf ein Gegenwerkzeug oder ein Widerlager aufgebracht werden.

Die Arbeitsstellung mit maximal angehobener Arbeitseinheit 61 und folglich durchgestreckten Kniehebelanordnungen zeigt die Fig. 1b, in der aus Gründen der Übersichtlichkeit lediglich die Drehachsen bezeichnet sind, nämlich die horizontalen Gelenkachsen 79 des von den beiden Getriebeteilen 73 gebildeten Koppelgetriebes, die Drehachse 75 des Rotors 65 sowie die Drehachse 107 der Antriebswelle 105 der mit dem Servomotor 71 verbundenen Getriebeeinheit 72.

Den Fig. 1c-1e, die eine andere Ausgestaltung dieses erfindungsgemäßen Konzeptes zeigen, sind weitere Komponenten der Arbeitsstation zu entnehmen.

Insbesondere geht aus Fig. 1c hervor, dass die Arbeitsstation eine in Arbeits- oder Transportrichtung T, die hier als Längsrichtung bezeichnet wird, gemessene Länge besitzt, die wesentlich kleiner ist als die der Arbeitsbreite der jeweiligen Verpackungsmaschine entsprechende, in Querrichtung Q gemessene Breite. Die erfindungsgemäße Arbeitsstation kann folglich sehr schmal gebaut werden. Insbesondere ist es möglich, den erfindungsgemäßen Hubmechanismus in einem Volumenelement unterzubringen, welches in Längsrichtung T eine Ausdehnung von weniger als 20 cm besitzt.

Zur Abstützung der Schwingen 83 am Gestell 47 sind Halter 103 vorgesehen, die an Seitenwänden der Arbeitsstation befestigt sind. Gestellfeste, sich in vertikaler Richtung erstreckende Führungen 111 wirken mit Rollen 113 zusammen, die jeweils außen an den beiden Führungsplatten 101 angebracht sind und so die unter anderem die Führungsplatten 101 und den Rotor 65 umfassende Anordnung beim Anheben und Absenken der Arbeitseinheit 61 in vertikaler Richtung führen. Hierdurch bleiben als Führungsbahnen 89 dienende, in den Führungsplatten 101 ausgebildete Langlöcher während der Auf- und Abbewegung in einer horizontalen Ausrichtung. In diesen Langlöchern 89 sind die bereits erwähnten gemeinsamen Stellen 87 der beiden Getriebeteile 73 geführt, an denen jeweils die beiden Koppeln 85, die beiden Lenker 81 und die Schwinge 83 um eine gemeinsame horizontale Achse 79 drehbar gelenkig miteinander verbunden sind.

In der Ausgestaltung gemäß Fig. 1a und 1b ist der Antrieb 63 mit schräggestellter Ausgangswelle 69 dargestellt. Eine solche Anordnung ist nicht zwingend, da die Getriebeeinheit 72 mit einer horizontal verlaufenden Antriebswelle 105 versehen ist, sodass der Antrieb 63 in einer gegenüber Fig. 1 und 1b um die Drehachse 107 der Antriebswelle 105 verdrehten Orientierung angeordnet werden kann.

Eine solche Positionierung des Antriebs 63 ist bei der Ausgestaltung gemäß den Fig. 1c-1e vorgesehen. Die Ausgangswelle 69 des Servomotors 71 erstreckt sich hier in horizontaler Richtung parallel zur Querrichtung Q. Der Antrieb 63 ist hierbei zwischen den zwei in Längsrichtung T beabstandeten Ebenen angeordnet, die durch die beiden Führungsplatten 101 definiert sind. Wie Fig. 1e zeigt, sind auf der Außenseite der in Fig. 1d hinteren Führungsplatte 101 zwei Zahnräder 105a und 109a angeordnet, die auf der jeweiligen Antriebswelle 105 bzw. 109 sitzen und durch einen Zahnriemen 76 miteinander verbunden sind. In dem Bereich zwischen den beiden Führungsplatten 101 treibt die Welle 109 über einen weiteren Zahnriemen 77 den Rotor 65 an (vgl. Fig. 1d).

Bei der Aufwärtsbewegung der Arbeitseinheit 61 und somit der beiden Führungsplatten 101 sowie des Rotors 65 bewegt sich auch der Antrieb mit Motor 71 und Getriebeeinheit 72 in vertikaler Richtung. Hierzu ist die Getriebeeinheit 72 mit der in Fig. 1d hinteren Führungsplatte 101 fest verbunden.

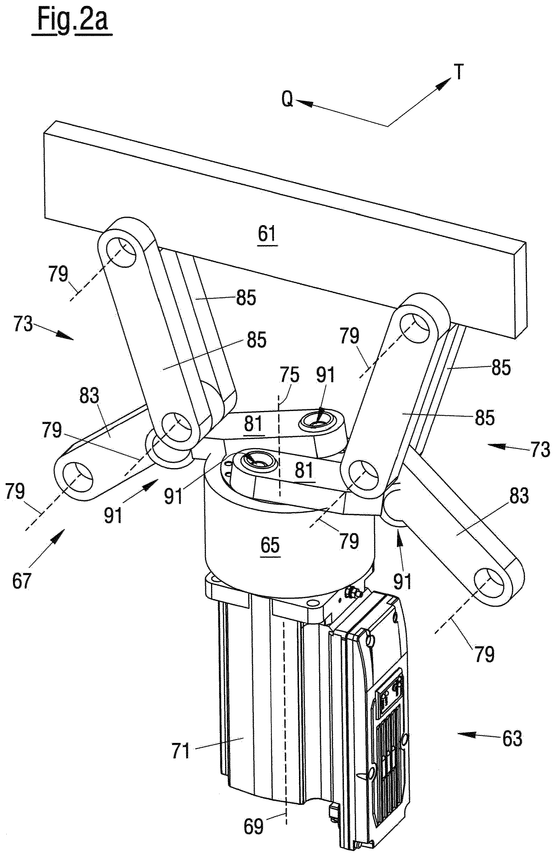

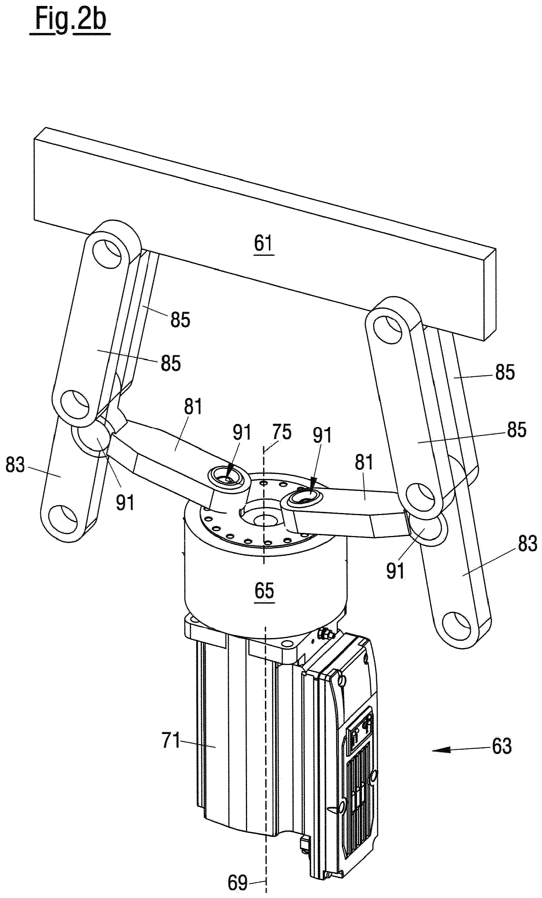

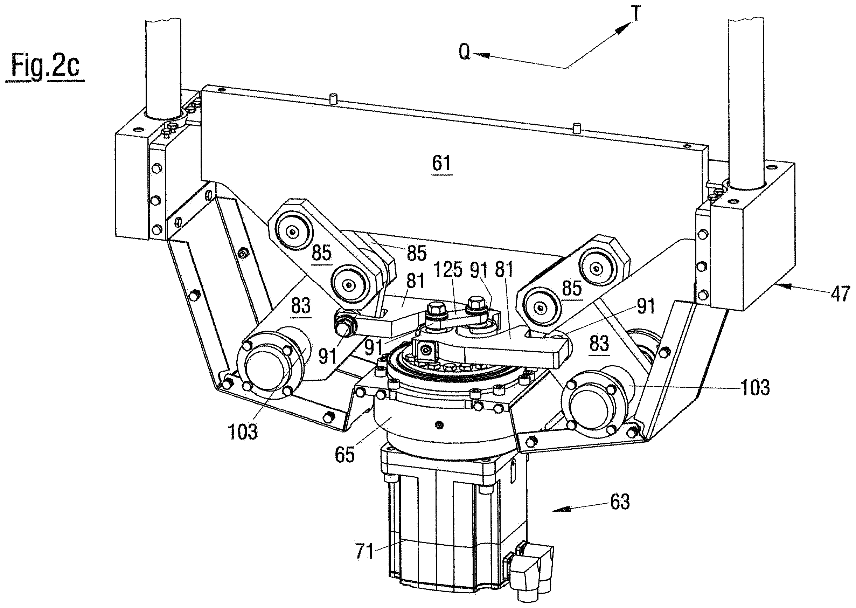

Bei dem weiteren erfindungsgemäßen Konzept, das in zwei Ausgestaltungen, nämlich gemäß Fig. 2a und 2b einerseits und Fig. 2c andererseits, dargestellt ist, ist der Rotor 65 anders orientiert, nämlich mit vertikal verlaufender Drehachse 75. Die Drehachse 75 des Rotors 65 und die Drehachse der Ausgangswelle 69 des Servomotors 71 fallen in diesem Ausführungsbeispiel zusammen. Der Servomotor 71 und der Rotor 65, die in axialer und hier vertikaler Richtung unmittelbar aufeinanderfolgen, bilden somit eine kompakte Einheit. Eine Getriebeeinheit zwischen Ausgangswelle 69 des Servomotors 71 und einer Welle des Rotors 65 kann vorgesehen und dann beispielsweise in den Rotor 65 integriert sein. Eine solche Getriebeeinheit ist aber nicht zwingend.

Das wiederum zwei gleichartige Getriebeteile 73 umfassende Getriebe 67 zwischen Rotor 65 einerseits und Arbeitseinheit 61 andererseits ist in diesem Ausführungsbeispiel als ein räumliches Koppelgetriebe mit Doppel-Kniehebelanordnung ausgebildet. Der Rotor 65 ist dabei wiederum mittig zwischen den beiden Getriebeteilen 73 angeordnet.

Die Getriebeteile 73 umfassen wiederum jeweils eine Kniehebel-Anordnung mit zwei parallelen geraden Koppeln 85 und einer am nicht dargestellten Gestell 47 angelenkten Schwinge 83. Des Weiteren umfasst jeder Getriebeteil 73 einen Lenker 81, der an der einen Seite mit der oberen Stirnseite des Rotors 65 und an der anderen Seite mit der Schwinge 83 gelenkig verbunden ist, und zwar jeweils über ein Kugelgelenk 91. Die beiden Lenker 81 sind an der oberen Stirnseite des Rotors 65 durch ein starres Verbindungsstück 125 miteinander verbunden. Hierduch wird für eine hohe Stabilität gesorgt und sichergestellt, dass trotz der hohen Kräfte, die insbesondere auf die Anlenkstellen des Rotors 65 für die Lenker 81 wirken, keine den Bewegungsablauf des Hubmechanismus beeinträchtigenden Verformungen auftreten.

Folglich stellen in diesem Ausführungsbeispiel nicht alle Gelenkverbindungen der Komponenten der Getriebeteile 73 eine reine Schwenkbewegung um eine horizontale Achse dar. Horizontale Gelenkachsen 79 sind bei den beiden Getriebeteilen 73 jeweils zwischen Schwinge 83 und Gestell 47 (vgl. Fig. 2c), zwischen den Koppeln 85 und der Arbeitseinheit 61 sowie zwischen den Koppeln 85 und der Schwinge 83 vorgesehen.

Durch Ansteuern des Servomotors 71 wird wiederum der Rotor 65 in Drehung versetzt, um in Abhängigkeit von der Drehrichtung die Arbeitseinheit 61 abzusenken oder anzuheben. Die abgesenkte Stellung mit gebeugten Kniehebel-Anordnungen zeigt Fig. 2a, während Fig. 2b die Kniehebel-Anordnungen jeweils in einer gestreckten Stellung zeigt, in welcher die Arbeitseinheit 61 maximal angehoben ist.

Wie die Ausgestaltung gemäß Fig. 2c zeigt, in der zusätzliche Komponenten der erfindungsgemäßen Arbeitsstation dargestellt sind, sind bei diesem, auch bei der Ausgestaltung gemäß Fig. 2a und 2b verwirklichten Konzept der Erfindung der Servomotor 71 und der Rotor 65 mit dem Gestell 47 fest verbunden, führen also während des Arbeitshubs der Arbeitseinheit 61 keine Vertikalbewegung durch.

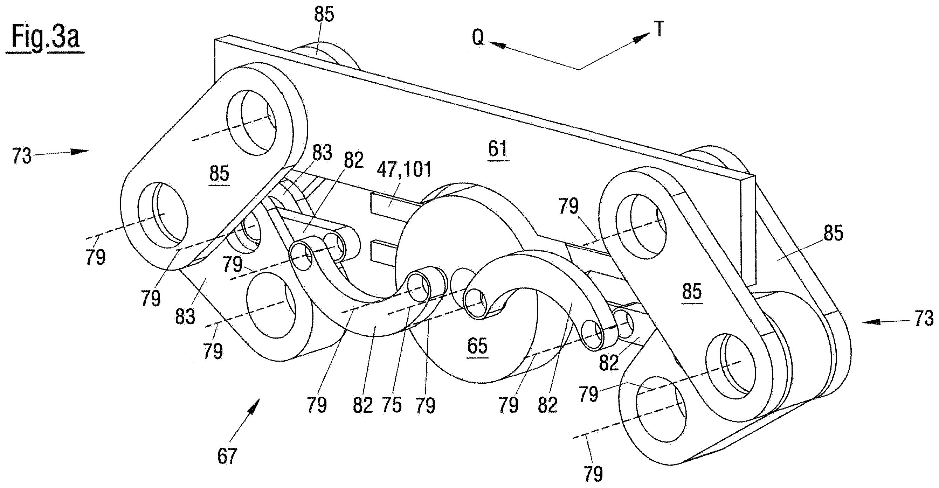

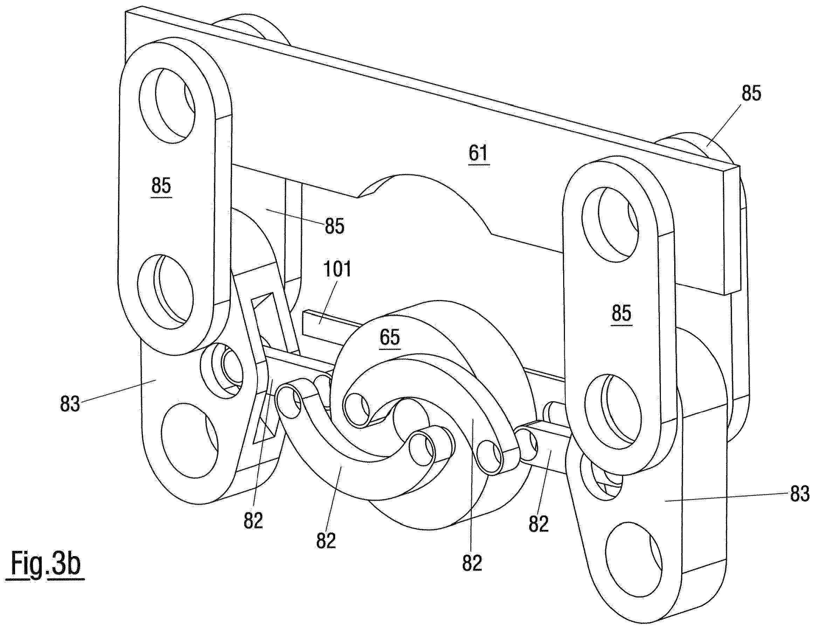

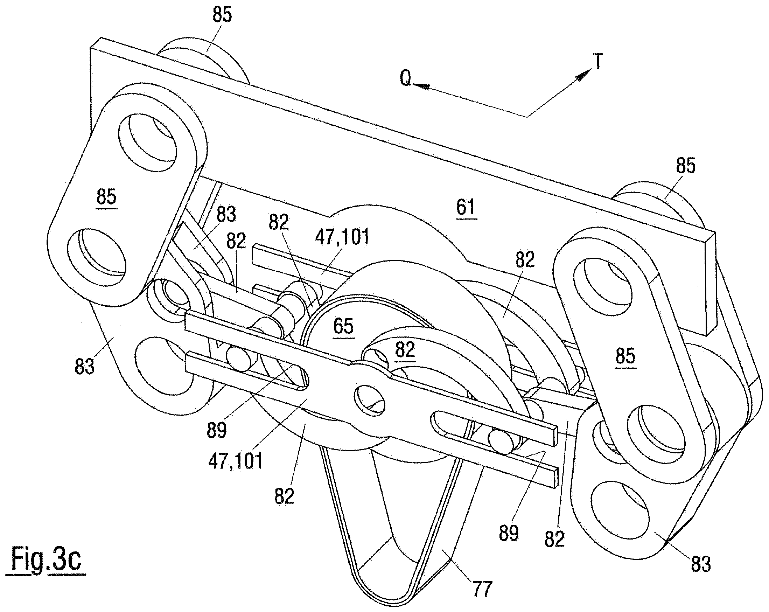

Das Konzept gemäß den Fig. 3a und 3b einerseits und gemäß Fig. 3c andererseits ähnelt dem Konzept der Fig. 1a-1e unter anderem insofern, als der Rotor 65 wiederum derart orientiert ist, dass dessen Drehachse 75 horizontal und parallel zur Längsrichtung T verläuft.

Ein Unterschied besteht aber darin, dass der Rotor 65 ortsfest, d.h. bezüglich der vertikalen Richtung stationär am Gestell 47 angebracht ist, das hier jeweils durch zwei in Längsrichtung T beabstandete Führungsplatten 101 repräsentiert ist (vgl. insbesondere Fig. 3c). An diesen beiden Führungsplatten 101 ist der dazwischen angeordnete Rotor 65 drehbar gelagert und sind die beiden Getriebeteile 73 in Querrichtung Q horizontal geführt. Hierzu sind wiederum Führungsbahnen 89 in den Führungsplatten 101 ausgebildet.

Das Getriebe 67 mit den beiden Getriebeteilen 73 ist wiederum ein ebenes Koppelgetriebe mit einer Doppel-Kniehebel-Anordnung. Alle Gelenkachsen 79 verlaufen wieder parallel zueinander sowie parallel zur Drehachse 75 des Rotors 65 und somit parallel zur Längsrichtung T. Die Schwingen 83 sind jeweils am unteren Ende gelenkig mit dem Gestell 47 und am oberen Ende zwischen den beiden Koppeln 65 gelenkig verbunden, die jeweils an ihrem oberen Ende gelenkig mit der Arbeitseinheit 61 verbunden sind.

Die Lenker der beiden Getriebeteile 73 umfassen hier jeweils zwei gelenkig miteinander verbundene Teillenker 82. An der gelenkigen Verbindung zwischen den beiden Teillenkern 82 sind diese und somit der jeweilige Getriebeteil 73 in der erwähnten Weise an den beiden Führungsplatten 101 und somit am Gestell 47 zwangsgeführt.

Die jeweils gelenkig an den beiden Stirnseiten des Rotors 65 angelenkten Teillenker 82 sind jeweils gekrümmt ausgeführt. Die beiden anderen Teillenker 82 sind gerade und jeweils an einer Stelle mit der jeweiligen Schwinge 83 verbunden, die nicht mit der gelenkigen Verbindung zwischen Schwinge 83 und Koppeln 85 zusammenfällt. Bei diesem Koppelgetriebe existieren folglich keine gemeinsamen Stellen im Sinne der gemeinsamen Stellen 87 des Konzepts gemäß den Fig. 1a-1e.

Vom Antrieb für den Rotor 65 ist lediglich in Fig. 3c ein Antriebsriemen 77 dargestellt. Grundsätzlich kann der Antrieb entsprechend dem Konzept der Fig. 1a-1c ausgeführt sein. Zu berücksichtigen ist hier, dass anders als beim Konzept der Fig. 1a-1c der Rotor 65 ortsfest am Gestell 47 angebracht, nämlich zwischen den beiden gestellfesten Führungsplatten 101 drehbar gelagert ist. Grundsätzlich kann die antriebswirksame Verbindung zwischen einem als Drehantrieb ausgebildeten Servomotor einerseits und dem in Fig. 3c dargestellten Zahnriemen 77 andererseits in beliebiger Weise erfolgen. Dabei wird der Servomotor bevorzugt derart angeordnet, dass die Drehachse seiner Ausgangswelle in einer Ebene liegt, die senkrecht zur Längsrichtung T verläuft. Dabei kann beispielsweise der Servomotor schräggestellt sein wie bei der Ausgestaltung gemäß Fig. 1a und 1b oder eine horizontale Lage einnehmen wie bei der Ausgestaltung gemäß den Fig. 1c-1e.

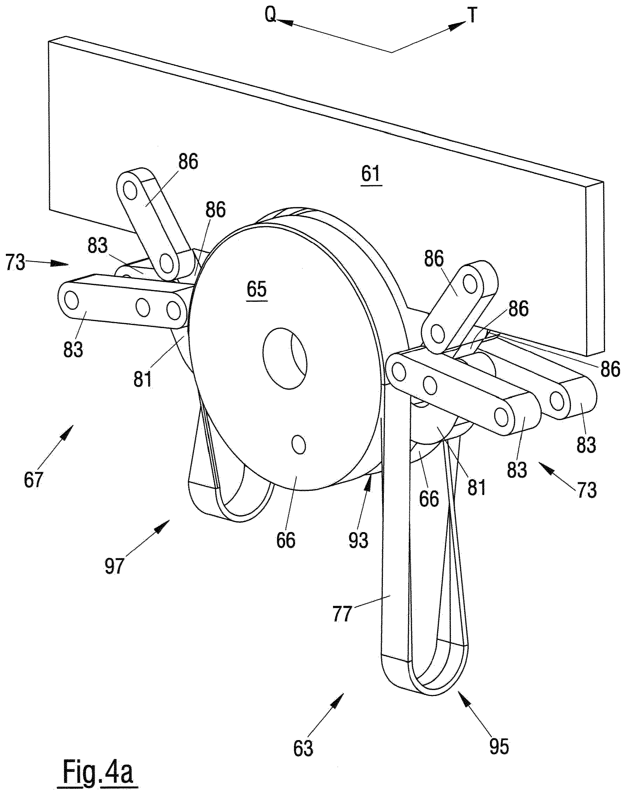

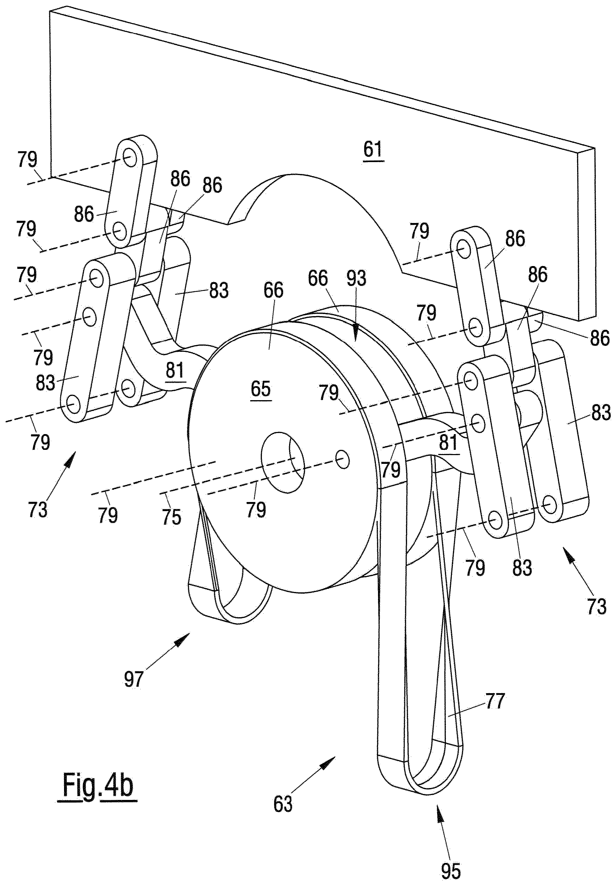

Beim Ausführungsbeispiel der Fig. 4a und 4b ist der Rotor 65 wiederum mit horizontal und parallel zur Längsrichtung T verlaufender Drehachse 75 angeordnet und verlaufen ebenfalls alle Gelenkachsen 79 des ebenen Koppelgetriebes 67, das wiederum zwei in Querrichtung Q zu beiden Seiten des mittig angeordneten Rotors 65 gelegene Getriebeteile 73 aufweist, parallel zur Drehachse 75 des Rotors 65.

Ein Unterschied zu den bisherigen Ausführungsbeispielen besteht darin, dass hier die Koppeln jeweils zweigliedrig ausgebildet sind und ein Paar paralleler gerader Teilkoppeln 86, die gelenkig mit der Arbeitseinheit 61 verbunden sind, und eine weitere gerade Teilkoppel 86, die einerseits mit den beiden erstgenannten Teilkoppeln 86 und andererseits mit einem Paar gerader paralleler Schwingen 83 gelenkig verbunden ist, umfassen. Dabei befindet sich die zuletzt genannte Teilkoppel 86 zwischen den jeweiligen beiden Teilkoppeln 86 bzw. Schwingen 83. Die gekrümmten Lenker 81 sind jeweils mit den beiden Schwingen 83 an einer anderen Stelle gelenkig verbunden als die Teilkoppel 86, sodass insofern auch in diesem Ausführungsbeispiel wiederum keine gemeinsame Stelle wie beim Konzept der Fig. 1a-1e vorgesehen ist.

Eine Besonderheit des Ausführungsbeispiels der Fig. 4a und 4b besteht darin, dass der Rotor 65 zwei jeweils scheibenförmig ausgebildete Rotorteile 66 umfasst, deren Drehachsen 75 zusammenfallen.

In den axialen Zwischenraum 93 zwischen den beiden Rotorteilen 66 erstrecken sich die beiden Lenker 81 hinein. In dem hier dargestellten Ausführungsbeispiel (vgl. insbesondere Fig. 4b) ist der Lenker 81 des in Fig. 4b rechten Getriebeteils 73 mit der in Fig. 4b vorderen Rotorscheibe 66 gelenkig verbunden, was durch den auf der Stirnseite dieser Rotorscheibe 66 dargestellten Kreis, durch den die Gelenkachse 79 hindurchverläuft, angedeutet ist, während der Lenker 81 des in Fig. 4b linken Getriebeteils 73 an die in Fig. 4b hintere Rotorscheibe 66 angelenkt ist. Von dieser Gelenkverbindung ist in Fig. 4b lediglich die Gelenkachse 79 gezeigt.

Wie bei den anderen zuvor erläuterten Ausführungsbeispielen sind die beiden Lenker 81 der beiden Getriebeteile 73 auch hier jeweils an einer von der Drehachse 75 radial beabstandeten Stelle an den Rotor 65 - hier also an ein jeweiliges Rotorteil 66 - angelenkt, wobei diese beiden Stellen einander diametral gegenüberliegen, also um 180° in Umfangsrichtung um die Drehachse 75 voneinander beabstandet sind.

Fig. 4a zeigt wiederum die Arbeitseinheit 61 in der am weitesten abgesenkten Stellung mit im gebeugten Zustand befindlichen Kniehebelanordnungen, die auch in diesem Ausführungsbeispiel durch die beiden Getriebeteile 73 realisiert sind. Fig. 4b zeigt wiederum den gestreckten Zustand mit in der höchsten Stellung befindlicher Arbeitseinheit 61.

Die beiden Teile 66 des Rotors 65 sind prinzipiell unabhängig voneinander drehbar gelagert, gleichwohl aber durch einen gemeinsamen Zahnriemen 77 derart miteinander gekoppelt, dass die beiden Rotorteile 66 nur synchronisiert, dabei aber gegenläufig, also mit entgegengesetztem Drehsinn, in Drehung versetzt werden. Hierzu umfasst der Antrieb 63 einen einzigen gemeinsamen Zahnriemen 77, der an seinen beiden Enden jeweils eine Schlaufe 95, 97 bildet und hierzu verdreht ist, wobei der Riemen 77 im Bereich zwischen den beiden Schlaufen 95, 97 beide Rotorteile jeweils über einen Teil des Umfangs umschlingt. Hierzu sind die Rotorteile 66 an ihrem Außenumfang mit einer Verzahnung für den Zahnriemen 77 versehen.

Der Antrieb 63 umfasst des Weiteren einen nicht dargestellten, als Drehantrieb ausgebildeten Servomotor, der direkt oder über ein Getriebeteil ein Antriebsritzel antreibt, um welches eine der beiden Schlaufen 95, 97 umläuft. Die jeweils andere Schlaufe 97 bzw. 95 läuft um eine nicht dargestellte Umlenkung um, die vorzugsweise nicht angetrieben ist und bei der es sich beispielsweise um ein frei drehbar gelagertes Zahnrad handelt.

Auf diese Weise lassen sich die beiden Getriebeteile 73 synchron mittels gegenläufig rotierender Rotoren 66 beaufschlagen, die mittels eines einzigen, den erwähnten speziellen Verlauf aufweisenden Zahnriemens 77 im Gegensinn synchron in Drehung versetzt werden.

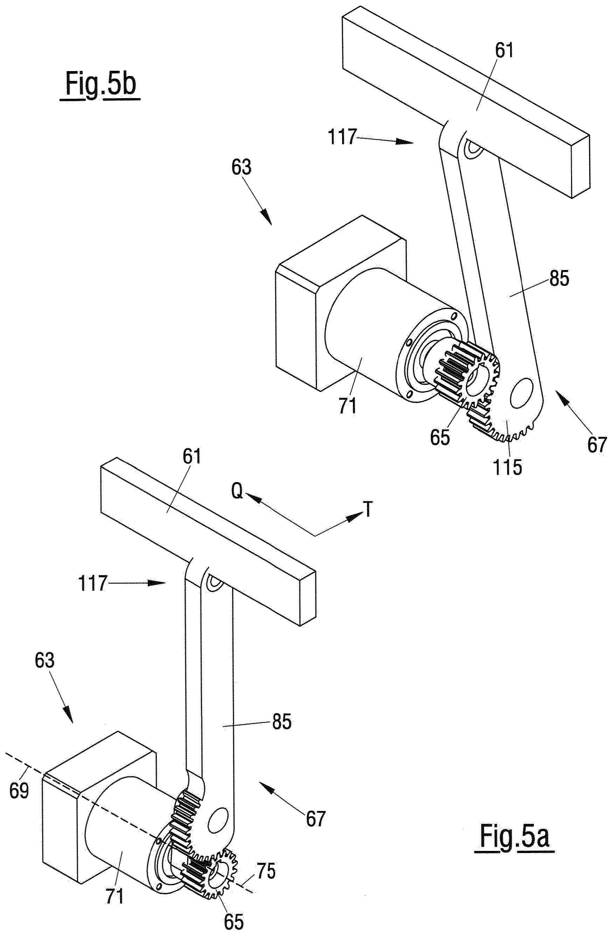

Die Fig. 5a und 5b veranschaulichen schematisch die mögliche Ausgestaltung des Getriebes 67 zwischen Antrieb 63 und Arbeitseinheit 61 als ein sogenanntes Watt'sches Planetengetriebe. Ein Abschnitt 115 eines Planetenzahnrades ist an einem Ende einer langgestreckten Koppel 85 ausgebildet und kämmt mit einem als Zahnrad ausgebildeten Rotor 65, der direkt mittels der Ausgangswelle 69 des Servomotors 71 angetrieben wird. Die Zwischenschaltung einer Getriebeeinheit zwischen Motor 71 und Rotor 65 ist möglich, aber nicht zwingend.

Wenn der Servomotor 71 den Rotor 65 in Drehung versetzt, bewegt sich der Abschnitt 115 auf einer Kreisbahn um die Drehachse 75 des Rotors 65. Dabei verbleibt die Koppel 85 in einer senkrecht zur Drehachse 75 des Rotors 65 und damit senkrecht zur Querrichtung Q verlaufenden Ebene, verändert aber ihre Orientierung bezüglich der Vertikalrichtung. Dies wird durch eine gelenkige Verbindung 117 zwischen dem oberen Ende der Koppel 85 und der Arbeitseinheit 61 kompensiert.

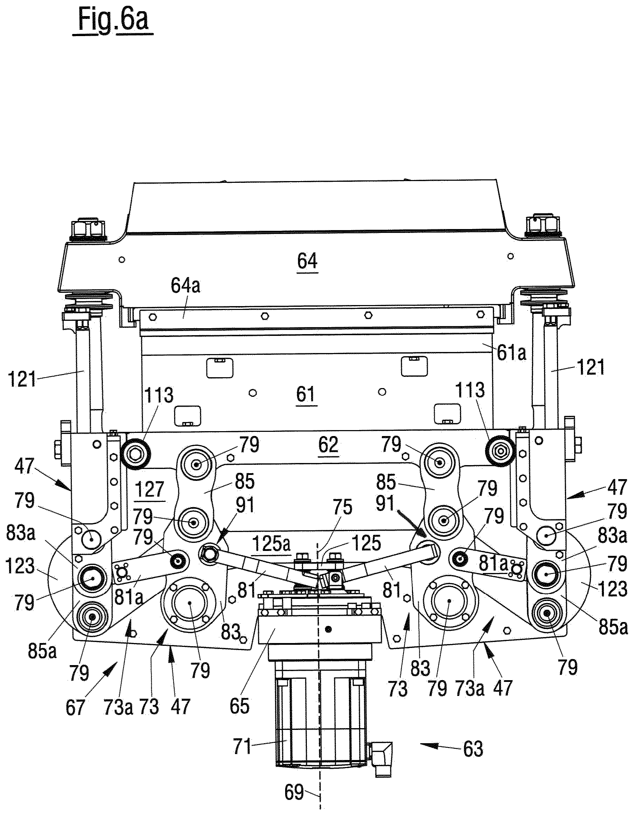

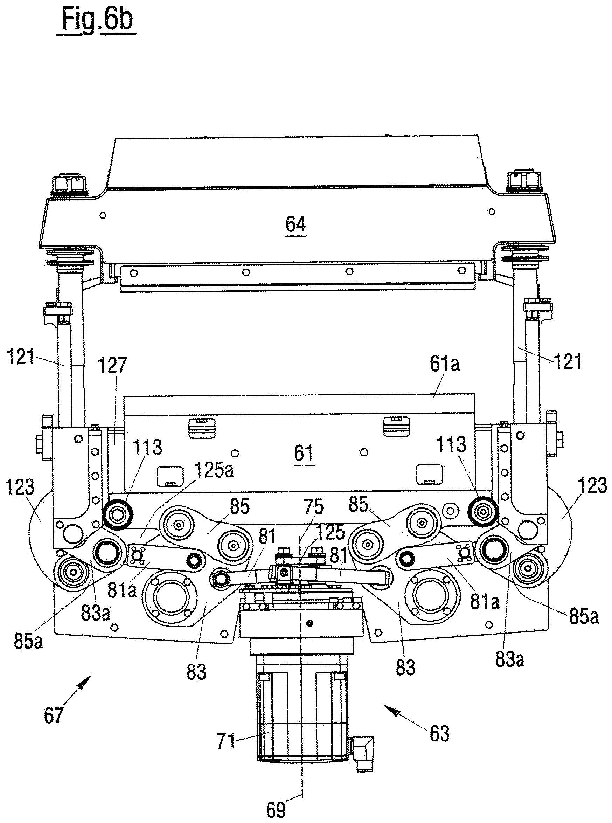

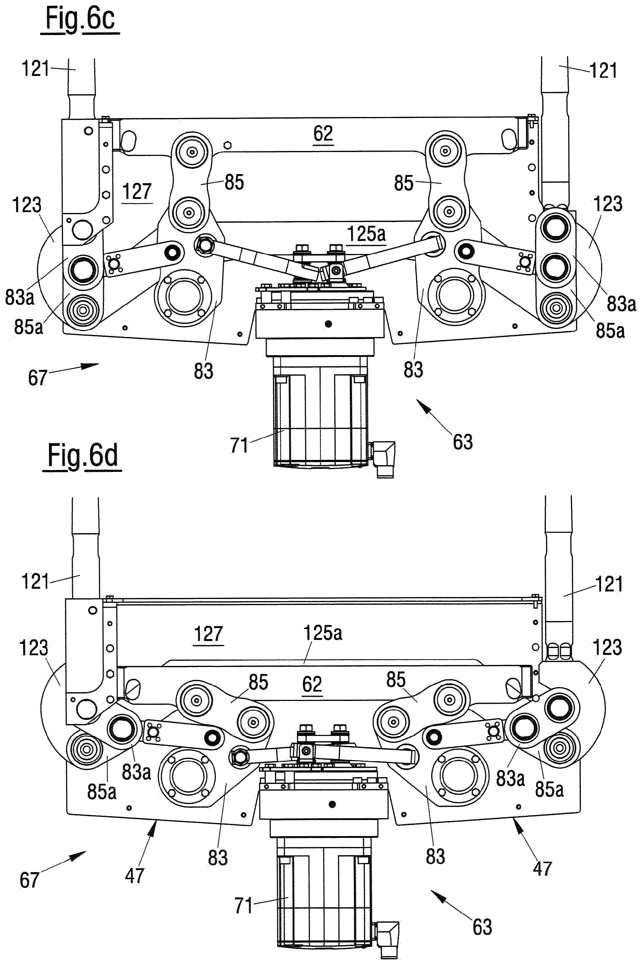

Das Ausführungsbeispiel der Fig. 6a bis 6h basiert für die untere Arbeitseinheit 61 auf dem Konzept der Fig. 2a bis 2c. Hierauf wird folglich nicht näher eingegangen, sondern es wird insoweit auf die Ausführungen zu den Fig. 2a bis 2c verwiesen. Die Fig. 6c bis 6h sind lediglich Teildarstellungen, die jeweils nur Teile der in Fig. 6a bzw. 6b dargestellten Anordnung zeigen, wobei insbesondere von der oberen Arbeitseinheit 64 jeweils nur die Tragstangen 121 und die Träger 123 dargestellt sind.

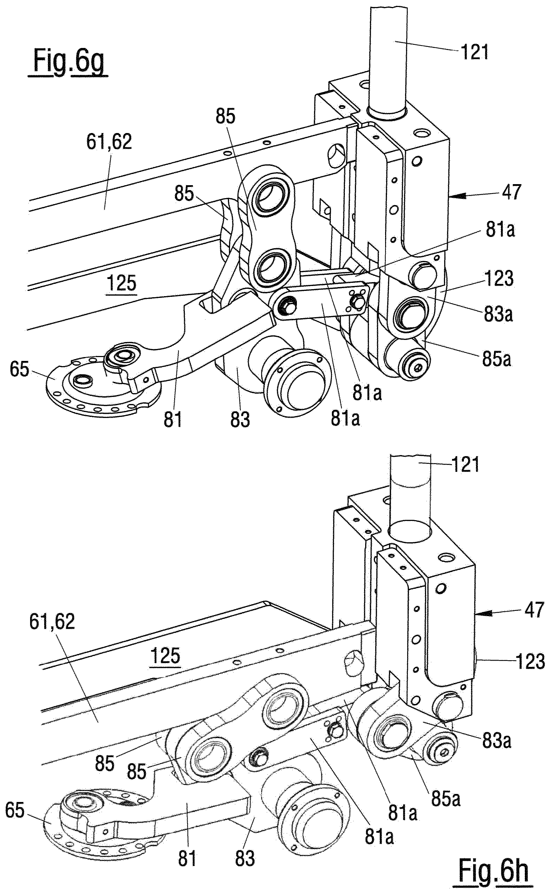

Beim Ausführungsbeispiel der Fig. 6a bis 6h bilden die beiden Getriebeteile 73 für die untere Arbeitseinheit 61 einen ersten Getriebeabschnitt mit dem bei Fig. 2a bis 2c beschriebenen Aufbau. Für eine obere Arbeitseinheit 64, die mittels zweier vertikaler Tragstangen 121 am Gestell 47 geführt ist, ist ein zweiter Getriebeabschnitt mit zwei Getriebeteilen 73a vorgesehen, die jeweils analog zu dem entsprechenden Getriebeteil 73 des ersten Getriebeabschnitts ausgebildet sind, d.h. einen Lenker 81a, eine Schwinge 83a und eine Koppel 85a aufweisen. Wie insbesondere Fig. 6g zeigt, umfasst der Lenker 81a zwei gelenkig miteinander verbundene Teillenker - insofern wie beim Lenker 81 gemäß Fig. 3a bis 3c. Jeder Teillenker 81a, die Schwinge 83a und die Koppel 85a bestehen jeweils aus zwei parallelen Teilen.

Die Getriebeteile 73, 73a sind bezüglich des Rotors 65 insofern in Reihe geschaltet, als die Bewegung des Getriebeteils 73a von der Bewegung des Getriebeteils 73 abgeleitet wird: Der Lenker 81a ist an einem Ende gelenkig mit der Schwinge 83 und am anderen Ende gelenkig mit der Schwinge 83a und der Koppel 85a verbunden.

Damit mittels der Rotors 65 die obere Arbeitseinheit 64 gegensinnig zur unteren Arbeitseinheit 61 bewegt wird, also entgegengesetzte Arbeitshübe ausgeführt werden, liegt für die untere Arbeitseinheit 61 deren gelenkige Verbindung zu ihrer Koppel 85 oberhalb der gelenkigen Verbindung zwischen dem Gestell 47 und ihrer Schwinge 83, während umgekehrt für die obere Arbeitseinheit 64 deren gelenkige Verbindung zu ihrer Koppel 85a unterhalb der gelenkigen Verbindung zwischen dem Gestell 47 und ihrer Schwinge 83a liegt.

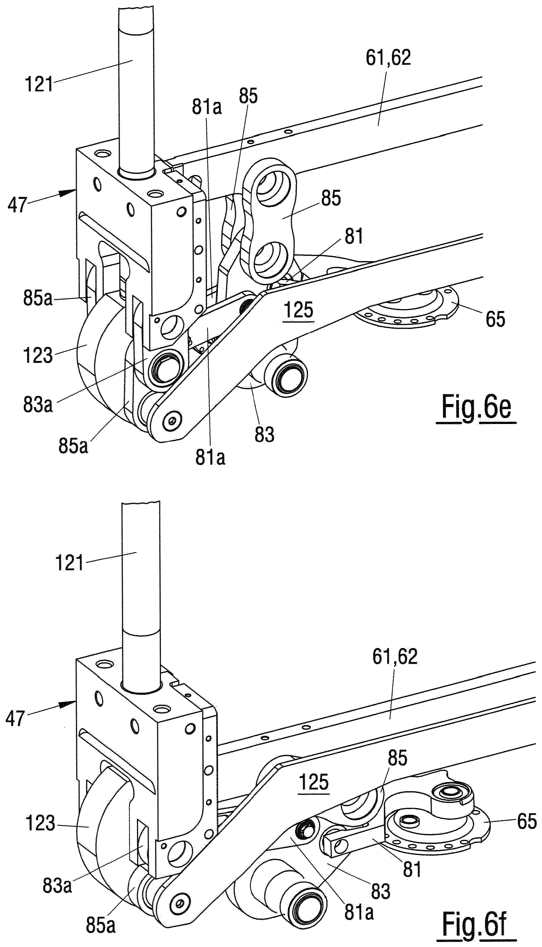

Wie insbesondere die Fig. 6e und 6f sowie 6g und 6h zeigen, sind die Tragstangen 121 jeweils mit einem Träger 123 gekoppelt, der gelenkig mit dem freien Ende der Koppel 85a verbunden und somit mittels der Koppel 85a in vertikaler Richtung bewegt wird. Analog zur Stabilisierung am Rotor 65 durch das Verbindungsstück 125 - wie vorstehend in Verbindung mit Fig. 2c erläutert - sind die Koppel 85a der beiden Getriebeteile 73a durch ein starres Verbindungsstück 125a (vgl. insbesondere Fig. 6e und 6f) miteinander verbunden. An beiden Getriebeteilen 73a ist jeweils die Koppel 85a relativ zu dem Träger 123 und relativ zu dem Verbindungsstück 125a um die gleiche horizontale Gelenkachse 79 verdrehbar.

Je nach Drehrichtung des Rotors 65 werden die beiden Arbeitseinheiten 61, 64 aufeinander zu in eine geschlossene Stellung (Fig. 6a, 6c, 6e, 6g) oder in eine offene Stellung (Fig. 6b, 6d, 6f, 6h) bewegt. Über an einer Strebe 62 angebrachte Rollen 113 ist die untere Arbeitseinheit 61 dabei am Gestell 47 geführt, wobei in Fig. 6c und 6d lediglich die Strebe 62, nicht aber die untere Arbeitseinheit 61 dargestellt ist, so dass insbesondere in Fig. 6d eine ansonsten zu einem großen Teil verdeckte Wand 127 sichtbar ist.

Die untere Arbeitseinheit 61 ist mit einem unteren Arbeitswerkzeug 61a - hier einem Stanzwerkzeug - und die obere Arbeitseinheit 64 mit einem oberen Arbeitswerkzeug 64a - hier einem Gegenstanzwerkzeug für das untere Stanzwerkzeug 61a - versehen. Die beiden Werkzeuge 61a, 64a wirken bei Erreichen der geschlossenen Stellung zusammen, um beispielsweise hier nicht dargestellte Verpackungen zu vereinzeln, wie im Einleitungsteil als Anwendungsbeispiel für die Erfindung erläutert.

### Bezugszeichenliste

- 10: Produkt
- 11: Formstation
- 11a: Oberwerkzeug
- 11b: Unterwerkzeug
- 11c: Stellantrieb
- 13: Einbringstation
- 13a: Förderband
- 13b: Förderband
- 14: Zufuhrstation
- 15: Siegelstation
- 15a: Oberwerkzeug
- 15b: Unterwerkzeug
- 15c: Stellantrieb
- 16: Etikettierstation
- 17: Trennstation (Querrichtung)
- 17a: Stellantrieb
- 19: Trennstation (Längsrichtung)
- 19a: Stellantrieb
- 21: Verpackung
- 23: Unterfolie
- 23a: Vorratsrolle
- 25: Oberfolie
- 25a: Vorratsrolle
- 27: Transporteinrichtung (Transportkette) für Unterfolie
- 29: Vertiefung
- 41: Steuereinrichtung
- 43: Siegelstelle
- 45: Bedieneinheit
- 47: Maschinengestell
- 50: Roboter
- 52: Greifer
- 61: Arbeitseinheit
- 61a: unteres Arbeitswerkzeug
- 62: Strebe
- 63: Antrieb
- 64: obere Arbeitseinheit
- 64a: oberes Arbeitswerkzeug
- 65: Rotor
- 66: Rotorteil
- 67: Getriebe
- 69: Antriebsorgan, Drehachse des Antriebsorgans
- 71: Servomotor
- 72: Getriebeeinheit
- 73, 73a: Getriebeteil
- 75: Drehachse des Rotors
- 76: Riemen
- 77: Riemen
- 79: Horizontale Gelenkachse
- 81, 81a: Lenker
- 82: Teillenker
- 83, 83a: Schwinge
- 85, 85a: Koppel
- 86: Teilkoppel
- 87: Gemeinsame Stelle
- 89: Bahn, Langloch
- 91: Kugelgelenk
- 93: Zwischenraum
- 95: Schlaufe
- 97: Schlaufe
- 99: Umlenkung
- 101: Führungsplatte
- 103: Halter
- 105: Antriebswelle
- 105a: Zahnrad
- 107: Drehachse der Antriebswelle
- 109: Antriebswelle
- 109a: Zahnrad
- 110: Drehachse der Antriebswelle
- 111: Führung
- 113: Rolle
- 115: Abschnitt eines Planetenzahnrades
- 117: Gelenkige Verbindung
- 121: Tragstange
- 123: Träger
- 125, 125a: Verbindungsstück
- 127: Wand

- Q: Querrichtung
- T: Transportrichtung, Längsrichtung

## Patentansprüche

1. Arbeitsstation, insbesondere Schneid-, Stanz-, Loch-, Form-, Tiefzieh- oder Siegelstation, für eine Verpackungsmaschine, insbesondere für eine Tiefziehverpackungsmaschine, mit
- einem am Boden abgestützten Gestell (47),
- zumindest einer Arbeitseinheit (61) mit einem Arbeitswerkzeug, und
- zumindest einem am Gestell (47) abgestützten Hubmechanismus, mit dem die Arbeitseinheit (61) zur Ausführung eines Arbeitshubs relativ zu dem Gestell (47) angehoben und abgesenkt werden kann,
wobei der Hubmechanismus einen Antrieb (63), einen Rotor (65) und ein Getriebe (67) umfasst,
wobei der Rotor (65) mittels des Antriebs (63) zum Anheben der Arbeitseinheit (61) in die eine Richtung und zum Absenken der Arbeitseinheit (61) in die entgegengesetzte Richtung drehbar ist,
wobei das Getriebe (67) eingangsseitig mit dem Rotor (65) und ausgangsseitig mit der Arbeitseinheit (61) verbunden ist, und
wobei der Antrieb (63) ein Drehantrieb mit einem rotierenden Antriebsorgan (69) ist, insbesondere einem Läufer oder einer Ausgangswelle eines Elektromotors, wobei die Drehbewegung des Ausgangsorgans (69) auf den Rotor (65) übertragen wird.

2. Arbeitsstation nach Anspruch 1,
wobei der Antrieb einen Servomotor (71) umfasst.

3. Arbeitsstation nach Anspruch 1 oder 2,
wobei der Hubmechanismus sich in einer Querrichtung (Q) und in einer Längsrichtung (T) erstreckt, und wobei die Ausdehnung des Hubmechanismus in Längsrichtung (T) kleiner ist als in Querrichtung (Q), insbesondere weniger als 1/2 oder weniger als 1/3 oder weniger als 1/4 oder weniger als 1/5 der Ausdehnung in Querrichtung (Q) beträgt, und/oder wobei der Hubmechanismus in einem gedachten quaderförmigen Raumelement enthalten ist, das eine in Querrichtung (Q) gemessene Breite und eine in Längsrichtung (T) gemessene Länge aufweist, wobei die Länge weniger als 200mm, vorzugsweise weniger als 140mm beträgt.

4. Arbeitsstation nach einem der vorhergehenden Ansprüche,
wobei das Getriebe (67) ein ebenes oder räumliches Koppelgetriebe ist, und/oder wobei das Getriebe (67) wenigstens eine Kniehebelanordnung umfasst, insbesondere eine Doppelkniehebel-Anordnung.

5. Arbeitsstation nach einem der vorhergehenden Ansprüche,
wobei das Getriebe (67) zwei, bevorzugt baugleiche, Getriebeteile (73) umfasst, die mittels des Rotors (65) parallel beaufschlagt werden, wobei bevorzugt die Getriebeteile (73) mit dem Rotor (65) an unterschiedlichen Eingangsstellen verbunden sind, wobei vorzugsweise bezüglich einer Drehachse (75) des Rotors (65) die beiden Eingangsstellen auf dem gleichen Radius liegen und um 180° gegeneinander versetzt sind, insbesondere wobei in einer Querrichtung (Q) des Hubmechanismus gesehen der Rotor (65) zwischen den beiden Getriebeteilen (73), insbesondere mittig, angeordnet ist.

6. Arbeitsstation nach einem der vorhergehenden Ansprüche,
wobei der Hubmechanismus bezüglich der Drehachse (75) des Rotors (65) einen symmetrischen Aufbau aufweist, und/oder wobei das Getriebe (67) oder jeder Getriebeteil (73) zumindest einen mit dem Rotor (65), insbesondere an einer von der Drehachse (75) des Rotors (65) beabstandeten Stelle, gelenkig verbundenen, insbesondere einen gekrümmten Verlauf aufweisenden, Lenker (81), wenigstens eine mit dem Gestell (47) gelenkig verbundene Schwinge (83) und zumindest eine mit der Arbeitseinheit (61) gelenkig verbundene Koppel (85) umfasst, und/oder wobei der maximale Hubweg der Arbeitseinheit (61) einer Drehung des Rotors (65) um nicht mehr als 180° entspricht.

7. Arbeitsstation nach einem der vorhergehenden Ansprüche,
wobei der Antrieb (63) mit dem Rotor (65) über zumindest einen Riemen (77) zusammenwirkt, und/oder wobei der Antrieb (63) und der Rotor (65) entweder beide stationär bezüglich des Gestells (47) angeordnet sind oder während des Arbeitshubs gemeinsam eine Hubbewegung relativ zu dem Gestell (47) ausführen, und/oder wobei die Arbeitseinheit (61) ausschließlich von dem Hubmechanismus getragen ist.

8. Arbeitsstation nach einem der vorhergehenden Ansprüche,
wobei das Getriebe (67) ein räumliches Koppelgetriebe ist, bei dem die Gelenkachsen (79) zwischen Arbeitseinheit (61) und Koppel (85), zwischen Gestell (47) und Schwinge (83) und zwischen Koppel (85) und Schwinge (83) horizontal verlaufen, bei dem die Drehachse (75) des Rotors (65) vertikal verläuft und bei dem die Lenker (81) mit dem Rotor (65) einerseits und mit der Koppel (85) oder der Schwinge (83) andererseits jeweils durch ein Kugelgelenk (91) verbunden sind, insbesondere wobei der Antrieb (63) ein Drehantrieb mit einem rotierenden Antriebsorgan (69) ist, insbesondere einem Läufer oder einer Ausgangswelle eines Elektromotors, wobei die Drehbewegung des Antriebsorgans (69) auf den Rotor (65) übertragen wird, und wobei die Drehachse des Antriebsorgans (69) parallel zur Drehachse (75) des Rotors (65) verläuft und insbesondere mit der Drehachse (75) des Rotors (65) zusammenfällt.

9. Arbeitsstation nach einem der vorhergehenden Ansprüche,
wobei wenigstens zwei in einer Längsrichtung beabstandete Hubmechanismen mit jeweils einem Antrieb (63), einem Rotor (65) und einem Getriebe (67) vorgesehen sind, wobei die Antriebe (63) der Hubmechanismen synchronisiert betreibbar sind, um die Arbeitseinheit (61) gemeinsam anzuheben und abzusenken.

10. Arbeitsstation nach einem der vorhergehenden Ansprüche,
wobei zwei Arbeitseinheiten (61, 64) vorgesehen sind, nämlich eine untere Arbeitseinheit (61) und eine obere Arbeitseinheit (64), die mit dem Hubmechanismus gleichzeitig und entgegengesetzt derart bewegbar sind, dass beim Anheben der einen Arbeitseinheit (61, 64) die andere Arbeitseinheit (64, 61) abgesenkt wird, und umgekehrt, wobei bevorzugt die zwei Arbeitseinheiten (61, 64) zwischen einer offenen Stellung und einer geschlossenen Stellung bewegbar sind und beim Bewegen in die geschlossene Stellung oder bei Erreichen der geschlossenen Stellung mit jeweiligen Werkzeugen gemeinsam eine Bearbeitung vornehmen, insbesondere ein Schneiden, Stanzen, Lochen, Formen, Tiefziehen oder Siegeln.

11. Arbeitsstation nach Anspruch 10,
wobei das eingangsseitig mit dem Rotor (65) verbundene Getriebe (67) ausgangsseitig sowohl mit der einen Arbeitseinheit (61) als auch mit der anderen Arbeitseinheit (64) verbunden ist, insbesondere an zwei unterschiedlichen Stellen, und/oder wobei das Getriebe (67) zwei Getriebeabschnitte umfasst, von denen der eine Getriebeabschnitt (81, 83, 85) eingangsseitig mit dem Rotor (65) und ausgangsseitig mit der einen, insbesondere der unteren, Arbeitseinheit (61) verbunden ist, und von denen der andere Getriebeabschnitt (81a, 83a, 85a) eingangsseitig mit dem einen Getriebeabschnitt (81, 83, 85) und ausgangsseitig mit der anderen, insbesondere der oberen, Arbeitseinheit (64) verbunden ist.

12. Arbeitsstation nach Anspruch 11,
wobei die beiden Getriebeabschnitte (81, 83, 85; 81a, 83a, 85a) jeweils zumindest ein ebenes oder ein räumliches Koppelgetriebe umfassen, und/oder
wobei die beiden Getriebeabschnitte (81, 83, 85; 81a, 83a, 85a) jeweils wenigstens eine Kniehebelanordnung umfassen, insbesondere jeweils eine Doppelkniehebel-Anordnung, und/oder
wobei die beiden Getriebeabschnitte (81, 83, 85; 81a, 83a, 85a) jeweils zwei, bevorzugt baugleiche, Getriebeteile (73; 73a) umfassen, die parallel beaufschlagt werden, wobei die Getriebeteile (73) des einen Getriebeabschnitts (81, 83, 85) mittels des Rotors (67) parallel beaufschlagt werden und die Getriebeteile (73a) des anderen Getriebeabschnitts (81a, 83a, 85a) jeweils mittels eines Getriebeteils (73) des einen Getriebeabschnitts (81, 83, 85) beaufschlagt werden, wobei insbesondere die beiden Getriebeteile (73a) des anderen Getriebeabschnitts (81a, 83a, 85a) durch ein starres Verbindungsstück (125a) miteinander verbunden sind, welches bevorzugt an beiden Getriebeteilen (73a) jeweils gelenkig mit einer Koppel (85a) des Getriebeteils (73a) verbunden ist.

13. Arbeitsstation nach Anspruch 11 oder 12,
wobei die beiden Getriebeabschnitte (81, 83, 85; 81a, 83a, 85a) jeweils zumindest einen Lenker (81; 81a), wenigstens eine mit dem Gestell (47) gelenkig verbundene Schwinge (83; 83a) und zumindest eine mit der jeweiligen Arbeitseinheit (61; 64) gelenkig verbundene Koppel (85) umfassen, wobei bevorzugt für die untere Arbeitseinheit (61) die gelenkige Verbindung zwischen Arbeitseinheit (61) und Koppel (85) oberhalb der gelenkigen Verbindung zwischen Gestell (47) und Schwinge (83) liegt und für die obere Arbeitseinheit (64) die gelenkige Verbindung zwischen Arbeitseinheit (64) und Koppel (85a) unterhalb der gelenkigen Verbindung zwischen Gestell (47) und Schwinge (83a) liegt, oder umgekehrt.

14. Verpackungsmaschine, insbesondere Tiefziehverpackungsmaschine, mit zumindest einer Arbeitsstation nach einem der vorhergehenden Ansprüche, insbesondere wobei die Arbeitsstation in einer Arbeitsrichtung (T) der Verpackungsmaschine einer Siegelstation (15) der Verpackungsmaschine nachgeordnet und zum Bearbeiten einer Materialbahn (23, 25), insbesondere einer Folienbahn, zum Bearbeiten einer Verpackung (21) oder eines Teils einer Verpackung (21) oder zum Vereinzeln von Verpackungen (21) ausgebildet ist.

15. Verwendung einer Arbeitsstation nach einem der Ansprüche 1 bis 13 in einer Verpackungsmaschine, insbesondere einer Tiefziehverpackungsmaschine, zum Bearbeiten einer Materialbahn (23, 25), insbesondere einer Folienbahn, zum Bearbeiten einer Verpackung (21) oder eines Teils einer Verpackung (21), oder zum Vereinzeln von Verpackungen (21),
wobei insbesondere das Bearbeiten ein Schneiden, Stanzen, Lochen, Formen, Tiefziehen oder Siegeln umfasst.

## Claims

1. A work station, in particular a cutting station, a punching station, a perforating station, a molding station, a deep-drawing station or a sealing station, for a packaging machine, in particular for a deep-draw packaging machine, comprising
- a frame (47) supported on the ground;
- at least one work unit (61) having a working tool; and
- at least one lifting mechanism which is supported at the frame (11) and by which the work unit (61) can be raised and lowered relative to the frame (47) to perform a working stroke,
wherein the lifting mechanism comprises a drive (63), a rotor (65) and a gear (67),
wherein the rotor (65) is rotatable by means of the drive (63) to raise the work unit (61) in the one direction and to lower the work unit (61) in the opposite direction,
wherein the gear (67) is connected to the rotor (65) at the input side and is connected to the work unit (61) at the output side, and
wherein the drive (63) is a rotary drive having a rotating drive member (69), in particular a runner or an output shaft of an electric motor, wherein the rotational movement of the output member (69) is transmitted to the rotor (65).

2. A work station in accordance with claim 1,
wherein the drive comprises a servomotor (71).

3. A work station in accordance with claim 1 or claim 2,
wherein the lifting mechanism extends in a transverse direction (Q) and in a longitudinal direction (T), and wherein the extent of the lifting mechanism in the longitudinal direction (T) is smaller than in the transverse direction (Q), in particular less than 1/2 or less than 1/3 or less than 1/4 or less than 1/5 of the extent in the transverse direction (Q), and/or wherein the lifting mechanism is included in an imaginary parallelepiped-shaped spatial element which has a width measured in the transverse direction (Q) and a length measured in the longitudinal direction (T), wherein the length amounts to less than 200mm, preferably less than 140mm.

4. A work station in accordance with any one of the preceding claims,
wherein the gear (67) is a planar or spatial linkage, and/or wherein the gear (67) comprises at least one toggle arrangement, in particular a double toggle arrangement.

5. A work station in accordance with any one of the preceding claims,
wherein the gear (67) comprises two gear parts (73), preferably two gear parts (73) of the same construction, which are acted on in parallel by means of the rotor (65), wherein preferably the gear parts (73) are connected to the rotor (65) at different input points, wherein preferably the two input points are disposed on the same radius with respect to an axis of rotation (75) of the rotor (65) and are offset from one another by 180°, in particular wherein the rotor (65) is arranged, in particular centrally arranged, between the two gear parts (73), viewed in a transverse direction (Q) of the lifting mechanism.

6. A work station in accordance with any one of the preceding claims,
wherein the lifting mechanism has a symmetrical design with respect to the axis of rotation (75) of the rotor (65), and/or wherein the gear (67) or each gear part (73) has at least one control arm (81) which in particular has a curved course and which is connected in an articulated manner to the rotor (65), in particular at a point spaced apart from the axis of rotation (75) of the rotor (65), at least one rocker (83) connected in an articulated manner to the frame (47) and at least one connecting rod (85) connected in an articulated manner to the work unit (61), and/or wherein the maximum stroke distance of the work unit (61) corresponds to a rotation of the rotor (65) by no more than 180°.

7. A work station in accordance with any one of the preceding claims,
wherein the drive (63) cooperates with the rotor (65) via at least one belt (77), and/or wherein the drive (63) and the rotor (65) are either both arranged in a stationary manner with respect to the frame (47) or together perform a lifting movement relative to the frame (47) during the working stroke, and/or wherein the work unit (61) is supported solely by the lifting mechanism.

8. A work station in accordance with any one of the preceding claims,
wherein the gear (67) is a spatial linkage, in which the joint axes (79) between the work unit (61) and the connecting rod (85), between the frame (47) and the rocker (83) and between the connecting rod (85) and the rocker (83) extend horizontally, in which the axis of rotation (75) of the rotor (65) extends vertically and in which the control arms (81) are connected to the rotor (65), on the one hand, and to the connecting rod (85) or the rocker (83), on the other hand, in each case by a ball joint (91), in particular wherein the drive (63) is a rotary drive having a rotating drive member (69), in particular a runner or an output shaft of an electric motor, wherein the rotational movement of the drive member (69) is transmitted to the rotor (65), and wherein the axis of rotation of the drive member (69) extends in parallel with the axis of rotation (75) of the rotor (65) and in particular coincides with the axis of rotation (75) of the rotor (65).

9. A work station in accordance with any one of the preceding claims,
wherein at least two lifting mechanisms spaced apart in a longitudinal direction and each comprising a drive (63), a rotor (65) and a gear (67) are provided, wherein the drives (63) of the lifting mechanisms can be operated in a synchronized manner to jointly raise and lower the work unit (61).

10. A work station in accordance with any one of the preceding claims,
wherein two work units (61, 64) are provided, namely a lower work unit (61) and an upper work unit (64), which are simultaneously and oppositely movable by the lifting mechanism such that, on the raising of the one work unit (61, 64), the other work unit (64, 61) is lowered, and vice versa, wherein preferably the two work units (61, 64) are movable between an open position and a closed position and, on the movement into the closed position or on the reaching of the closed position, together perform a processing using respective tools, in particular a cutting, a punching, a perforating, a molding, a deep-drawing or a sealing.

11. A work station in accordance with claim 10,
wherein the gear (67) connected to the rotor (65) at the input side is connected both to the one work unit (61) and to the other work unit (64) at the output side, in particular at two different points, and/or wherein the gear (67) comprises two gear sections, of which the one gear section (81, 83, 85) is connected to the rotor (65) at the input side and to the one work unit (61), in particular to the lower work unit (61), at the output side and of which the other gear section (81a, 83a, 85a) is connected to the one gear section (81, 83, 85) at the input side and to the other work unit (64), in particular to the upper work unit (64), at the output side.

12. A work station in accordance with claim 11,
wherein the two gear sections (81, 83, 85; 81a, 83a, 85a) each comprise at least one planar linkage or one spatial linkage, and/or
wherein the two gear sections (81, 83, 85; 81a, 83a, 85a) each comprise at least one toggle arrangement, in particular a double toggle arrangement, and/or
wherein the two gear sections (81, 83, 85; 81a, 83a, 85a) each comprise two gear parts (73; 73a), preferably two gear parts (73; 73a) of the same construction, which are acted on in parallel, wherein the gear parts (73) of the one gear section (81, 83, 85) are acted on in parallel by means of the rotor (67) and the gear parts (73a) of the other gear section (81a, 83a, 85a) are each acted on by means of a gear part (73) of the one gear section (81, 83, 85), wherein in particular the two gear parts (73a) of the other gear section (81a, 83a, 85a) are connected to one another by a rigid connection piece (125a) which is preferably in each case connected in an articulated manner to a connecting rod (85a) of the gear part (73a) at both two gear parts (73a).

13. A work station in accordance with claim 11 or claim 12,
wherein the two gear sections (81, 83, 85; 81a, 83a, 85a) each comprise at least one control arm (81; 81a); at least one rocker (83; 83a) connected in an articulated manner to the frame (47); and at least one connecting rod (85) connected in an articulated manner to the respective work unit (61; 64), wherein preferably, for the lower work unit (61), the articulated connection between the work unit (61) and the connecting rod (85) lies above the articulated connection between the frame (47) and the rocker (83) and, for the upper work unit (64), the articulated connection between the work unit (64) and the connecting rod (85a) lies below the articulated connection between the frame (47) and the rocker (83a), or vice versa.

14. A packaging machine, in particular a deep-draw packaging machine, comprising at least one work station in accordance with any one of the preceding claims, in particular wherein the work station is arranged downstream of a sealing station (15) of the packaging machine in a direction of work (T) of the packaging machine and is configured to process a material web (23, 25), in particular a film web, to process a packaging (21) or a part of a packaging (21) or to separate packagings (21).

15. Use of a work station in accordance with any one of the claims 1 to 13 in a packaging machine, in particular in a deep-draw packaging machine, for processing a material web (23, 25), in particular a film web, for processing a packaging (21) or a part of a packaging (21) or for separating packagings (21),
wherein in particular the processing comprises a cutting, a punching, a perforating, a molding, a deep-drawing or a sealing.

## Revendications

1. Poste de travail, en particulier poste de découpe, de poinçonnage, de perforation, de formage, d'emboutissage ou de scellement, pour une machine d'emballage, en particulier pour une machine d'emballage par emboutissage, comportant
- un bâti (47) reposant au sol,
- au moins une unité de travail (61) comportant un outil de travail, et
- au moins une mécanique de levage supportée sur le bâti (47), au moyen de laquelle l'unité de travail (61) peut être levée et abaissée par rapport au bâti (47) afin d'effectuer une course de travail,
dans lequel
la mécanique de levage comprend un entraînement (63), un rotor (65) et un mécanisme (67),
le rotor (65) peut être mis en rotation par ledit entraînement (63) dans une direction pour lever l'unité de travail (61) et dans la direction opposée pour abaisser l'unité de travail (61),
le mécanisme (67) est relié du côté entrée au rotor (65) et du côté sortie à l'unité de travail (61), et
l'entraînement (63) est un entraînement en rotation comprenant un élément d'entraînement rotatif (69), en particulier un rotor ou un arbre de sortie d'un moteur électrique, le mouvement de rotation de l'élément de sortie (69) étant transmis au rotor (65).

2. Poste de travail selon la revendication 1,
dans lequel l'entraînement comprend un servomoteur (71).

3. Poste de travail selon la revendication 1 ou 2,
dans lequel la mécanique de levage s'étend dans une direction transversale (Q) et dans une direction longitudinale (T), et l'extension de la mécanique de levage dans la direction longitudinale (T) est plus petite que dans la direction transversale (Q) et est en particulier moins de 1/2 ou moins de 1/3 ou moins de 1/4 ou moins de 1/5 de l'extension dans la direction transversale (Q), et/ou la mécanique de levage est contenue dans un élément spatial parallélépipédique imaginaire ayant une largeur mesurée dans la direction transversale (Q) et une longueur mesurée dans la direction longitudinale (T), la longueur étant inférieure à 200 mm, de préférence inférieure à 140 mm.

4. Poste de travail selon l'une des revendications précédentes,
dans lequel
le mécanisme (67) est un mécanisme à bielle planaire ou spatial, et/ou le mécanisme (67) comprend au moins un ensemble à genouillère, en particulier un ensemble à double genouillère.

5. Poste de travail selon l'une des revendications précédentes,
dans lequel
le mécanisme (67) comprend deux parties de mécanisme (73), de préférence de construction identique, qui sont sollicitées en parallèle au moyen du rotor (65),
de préférence, les parties de mécanisme (73) sont reliées au rotor (65) à différents emplacements d'entrée,
de préférence, par rapport à un axe de rotation (75) du rotor (65), les deux emplacements d'entrée se trouvent sur le même rayon et sont décalés l'un par rapport à l'autre de 180°,
en particulier, vu dans une direction transversale (Q) de la mécanique de levage, le rotor (65) est disposé entre les deux parties de mécanisme (73), en particulier au milieu.

6. Poste de travail selon l'une des revendications précédentes,
dans lequel la mécanique de levage présente une structure symétrique par rapport à l'axe de rotation (75) du rotor (65), et/ou
le mécanisme (67) ou chaque partie de mécanisme (73) présente au moins un bras articulé relié en articulation au rotor (65), en particulier à un emplacement espacé de l'axe de rotation (75) du rotor (65), et présentant en particulier un tracé courbe, au moins un culbuteur (83) relié en articulation au bâti (47), et au moins une bielle (85) reliée en articulation à l'unité de travail (61), et/ou
la course maximale de l'unité de travail (61) correspond à une rotation du rotor (65) de 180° au maximum.

7. Poste de travail selon l'une des revendications précédentes,
dans lequel
l'entraînement (63) coopère avec le rotor (65) par l'intermédiaire d'au moins une courroie (77), et/ou
l'entraînement (63) et le rotor (65) sont tous deux stationnaires par rapport au bâti (47) ou effectuent ensemble un mouvement de levage par rapport au bâti (47) pendant la course de travail, et/ou
l'unité de travail (61) est exclusivement supportée par la mécanique de levage.

8. Poste de travail selon l'une des revendications précédentes,
dans lequel
le mécanisme (67) est un mécanisme à bielle spatial, dans lequel les axes d'articulation (79) entre l'unité de travail (61) et la bielle (85), entre le bâti (47) et le culbuteur (83) et entre la bielle (85) et le culbuteur (83) s'étendent horizontalement,
l'axe de rotation (75) du rotor (65) s'étend verticalement, et
les bras articulés (81) sont reliées au rotor (65) d'une part et à la bielle (85) ou au culbuteur (83) d'autre part, respectivement par une articulation sphérique (91),
en particulier, l'entraînement (63) est un entraînement en rotation ayant un élément d'entraînement rotatif (69), en particulier un rotor ou un arbre de sortie d'un moteur électrique,
le mouvement de rotation de l'élément d'entraînement (69) est transmis au rotor (65), et
l'axe de rotation de l'élément d'entraînement (69) s'étend parallèlement à l'axe de rotation (75) du rotor (65) et coïncide en particulier avec l'axe de rotation (75) du rotor (65).

9. Poste de travail selon l'une des revendications précédentes,
dans lequel sont prévues au moins deux mécaniques de levage espacées dans une direction longitudinale, chacune ayant un entraînement (63), un rotor (65) et un mécanisme (67), et
les entraînements (63) des mécaniques de levage peuvent fonctionner de manière synchronisée pour lever et abaisser conjointement l'unité de travail (61).

10. Poste de travail selon l'une des revendications précédentes,
dans lequel sont prévues deux unités de travail (61, 64), à savoir une unité de travail inférieure (61) et une unité de travail supérieure (64), qui peuvent être déplacées simultanément et de manière opposée avec la mécanique de levage de telle sorte que, lorsqu'une unité de travail (61, 64) est levée, l'autre unité de travail (64, 61) est abaissée, et vice versa,
de préférence, les deux unités de travail (61, 64) sont mobiles entre une position ouverte et une position fermée et, lorsqu'elles sont déplacées jusque dans la position fermée ou lorsqu'elles atteignent la position fermée, elles procèdent à une opération, en particulier à une opération de découpe, de poinçonnage, de perforation, de formage, d'emboutissage ou de scellement, conjointement avec des outils respectifs.

11. Poste de travail selon la revendication 10,
dans lequel le mécanisme (67) relié côté entrée au rotor (65) est relié côté sortie aussi bien à l'une des unités de travail (61) qu'à l'autre unité de travail (64), en particulier à deux emplacements différents, et/ou
le mécanisme (67) comprend deux portions de mécanisme, dont l'une des portions de mécanisme (81, 83, 85) est reliée, côté entrée, au rotor (65) et, côté sortie, à l'une des unités de travail, en particulier inférieure (61), et dont l'autre portion de mécanisme (81a, 83a, 85a) est reliée, côté entrée, à ladite portion de mécanisme (81, 83, 85) et, côté sortie, à l'autre unité de travail, en particulier supérieure (64).

12. Poste de travail selon la revendication 11,
dans lequel les deux portions de mécanisme (81, 83, 85 ; 81a, 83a, 85a) comprennent chacune au moins un mécanisme à bielle planaire ou spatial, et/ou
les deux portions de mécanisme (81, 83, 85 ; 81a, 83a, 85a) comprennent chacune au moins un ensemble à genouillère, en particulier un ensemble à double genouillère, et/ou
les deux portions de mécanisme (81, 83, 85 ; 81a, 83a, 85a) comprennent chacune deux parties de mécanisme (73 ; 73a), de préférence de construction identique, qui sont sollicitées en parallèle, les parties de mécanisme (73) d'une portion de mécanisme (81, 83, 85) étant sollicitées en parallèle au moyen du rotor (67), et les parties de mécanisme (73a) de l'autre portion de mécanisme (81a, 83a, 85a) étant sollicitées chacune au moyen d'une partie de mécanisme (73) de ladite portion de mécanisme (81, 83, 85), en particulier, les deux parties de mécanisme (73a) de l'autre portion de mécanisme (81a, 83a, 85a) sont reliées l'une à l'autre par une pièce de liaison rigide (125a) qui, de préférence au niveaux des deux parties de mécanisme (73a), est reliée en articulation à une bielle respective (85a) de la partie de mécanisme (73a).

13. Poste de travail selon la revendication 11 ou 12,
dans lequel les deux portions de mécanisme (81, 83, 85 ; 81a, 83a, 85a) comprennent chacune au moins un bras articulé (81 ; 81a), au moins un culbuteur (83 ; 83a) relié en articulation au bâti (47), et au moins une bielle (85a) reliée en articulation à l'unité de travail respective (61 ; 64),
de préférence, pour l'unité de travail inférieure (61), la liaison en articulation entre l'unité de travail (61) et la bielle (85) se trouve au-dessus de la liaison en articulation entre le bâti (47) et le culbuteur (83) et, pour l'unité de travail supérieure (64), la liaison en articulation entre l'unité de travail (64) et la bielle (85a) se trouve au-dessous de la liaison en articulation entre le bâti (47) et le culbuteur (83a), ou vice versa.

14. Machine d'emballage, en particulier machine d'emballage par emboutissage, comportant au moins un poste de travail selon l'une des revendications précédentes,
dans laquelle
en particulier, le poste de travail est disposé en aval d'un poste de scellement (15) de la machine d'emballage dans une direction de travail (T) de la machine d'emballage et est réalisé pour traiter une bande de matériau (23, 25), en particulier une bande de film, pour traiter un emballage (21) ou une partie d'un emballage (21), ou pour individualiser des emballages (21).

15. Utilisation d'un poste de travail selon l'une des revendications 1 à 13 dans une machine d'emballage, en particulier dans une machine d'emballage par emboutissage, pour traiter une bande de matériau (23, 25), en particulier une bande de film, pour traiter un emballage (21) ou une partie d'un emballage (21), ou pour individualiser des emballages (21),
dans lequel, en particulier, le traitement inclut une opération de découpe, de poinçonnage, de perforation, de formage, d'emboutissage ou de scellement.
